(19) **Europäisches Patentamt**
**European Patent Office**
**Office européen des brevets**

(11) **EP 1 894 898 B1**

(12) **EUROPEAN PATENT SPECIFICATION**

(45) Date of publication and mention
of the grant of the patent:
**13.02.2013 Bulletin 2013/07**

(51) Int Cl.:
*C03B 37/012* *(2006.01)* *C03B 37/014* *(2006.01)*
*C03C 15/00* *(2006.01)* *C03C 25/68* *(2006.01)*

(21) Application number: **07075824.8**

(22) Date of filing: **01.12.2000**

(54) **Method for modifying a glass base material for an optical fiber**

Verfahren zur Änderung eines Basismaterials für Lichtwellenleiter

Procédé de modification d'un matériel de base pour fibre optique

(84) Designated Contracting States:
**DE FR GB**

(30) Priority: **01.12.1999 JP 34161699**
**01.12.1999 JP 34183499**
**17.12.1999 JP 35920299**
**26.01.2000 JP 2000017021**
**24.02.2000 JP 2000047135**
**03.04.2000 JP 2000100418**
**04.04.2000 JP 2000102643**
**20.04.2000 JP 2000119186**

(43) Date of publication of application:
**05.03.2008 Bulletin 2008/10**

(62) Document number(s) of the earlier application(s) in
accordance with Art. 76 EPC:
**00126272.4 / 1 106 584**

(73) Proprietor: **Shin-Etsu Chemical Co., Ltd.**
**Tokyo (JP)**

(72) Inventors:
• **Shimada, Tadakatsu**
**Shin-Etsu Chemical Co., Ltd.**
**Annaka-shi, Gunma (JP)**
• **Inoue, Dai**
**Shin-Etsu Chemical Co., Ltd.**
**Annaka-shi, Gunma (JP)**
• **Oyamada, Hiroshi**
**Shin-Etsu Chemical Co., Ltd.**
**Annaka-shi, Gunma (JP)**
• **Hatayama, Kazuhisa**
**Shin-Etsu Chemical Co., Ltd.**
**Annaka-shi, Gunma (JP)**
• **Machida, Hiroshi**
**Shin-Etsu Chemical Co., Ltd.**
**Annaka-shi, Gunma (JP)**
• **Otosaka, Tetsuya**
**Shin-Etsu Chemical Co., Ltd.**
**Annaka-shi, Gunma (JP)**
• **Saitoh, Fumio**
**Shin-Etsu Chemical Co., Ltd.**
**Annaka-shi, Gunma (JP)**
• **Nakashima, Yasuhiro**
**Shin-Etsu Chemical Co., Ltd.**
**Annaka-shi, Gunma (JP)**
• **Kamio, Takeshi**
**Shin-Etsu Chemical Co., Ltd.**
**Annaka-shi, Gunma (JP)**
• **Terashima, Masami**
**Shin-Etsu Chemical Co., Ltd.**
**Annaka-shi, Gunma (JP)**
• **Arisaka, Isao**
**Shin-Etsu Chemical Co., Ltd.**
**Annaka-shi, Gunma (JP)**
• **Hirasama, Hideo**
**Shin-Etsu Chemical Co., Ltd.**
**Annaka-shi, Gunma (JP)**
• **Kemmochi, Soichiro**
**Shin-Etsu Chemical Co., Ltd.**
**Chiyoda-ku, Tokyo (JP)**

(74) Representative: **Bergmann, Jürgen**
**Pfenning, Meinig & Partner GbR**
**Patent- und Rechtsanwälte**
**Joachimstaler Strasse 10-12**
**10719 Berlin (DE)**

(56) References cited:
**JP-A- 63 139 024    US-A- 5 897 679**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 894 898 B1

**Description**

BACKGROUND OF THE INVENTION

1. Field of the invention

The present invention relates to a method for modifying a glass base material for an optical fiber.

2. Description of the Related Art

An optical fiber is generally manufactured as follows There is called as VAD method in which a porous base material is obtained such that particles of $SiO_2$ made from material gas, for instance SiO4, subjected to hydrolysis with oxyhydrogen flame are deposited on an initial material being moving up while rotating. In another called OVD method, a porous base material is obtained such that particles of $SiO_2$ made from material gas, for instance SiO4, subjected to hydrolysis with oxyhydrogen flame from a burner movable relatively to an initial material are deposited on the initial material being rotating. Still further, there is called as MCVD method in which a material gas flows into a cladding material of a quartz tube or the like and the gas is subjected to reaction and deposition therein. Then, while a hanging mechanism is hanging the base material thus obtained, the base material is subjected to heating and dehydrating to vitrify, so that a preform for an optical fiber is manufactured. Finally, an optical fiber is obtained by drawing the preform thus manufactured.

During these manufacturing process, the natural frequency for rotation of the soot deposited material being deposited the soot on the initial material shifts from lower to higher as the soot deposited material is growing up. When the natural frequency reaches up to integer times as much as the rotation number of the rotary shaft, the growing point positioned at the lower end portion of the soot material starts swinging in great measure, so that it is difficult to uniformly deposit glass particles thereon. Consequently, un desired singularities generates in the soot deposited material. It is problematic that an optical fiber obtained by drawing a preform formed by vitrifying such a soot deposited material has unstable characteristics in the length direction of the preform, as the cutoff wave length and the mode field diameter thereof extremely vary at the singularities, as well as the polarized mode dispersion for an optical signal transmitting within the optical fiber becomes large. Especially, the polarized made dispersion gets more important issue as the transmission density of signals become larger for an optical fiber.

It is found, by the number of research, that the polarized mode dispersion is caused by birefringence in the core of the optical fiber, and the birefringence is caused to non-circular shape of the core, the coating layer coating on the optical fiber, stress within the optical fiber due to status and bending of the cable.

It is thought the cause of the non-circular shape of the core or the cladding is, for instance, swings or uneven rotations of the soot deposited material during manufacturing.

Generally, with respect to generating the swing, in case that a bar is hung at the upper end thereof, a swingy rotation occurs at the lower end of the bar when the rotary axis of the bar deviates from the central axis of the bar.

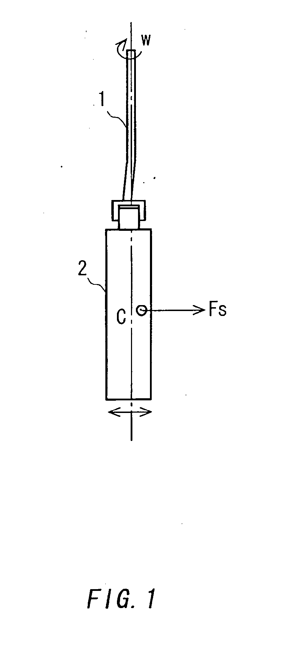

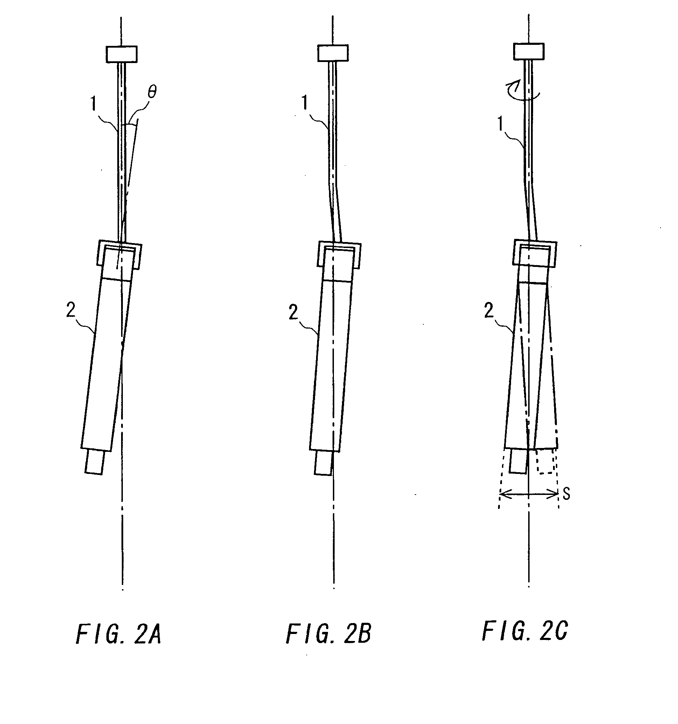

More detail will be explained, referring to Figs. 1 and 2A to 2C. Fig. 1 illustrates a condition that an initial material 2 is hung by an upper portion of a support shaft 1. This is an example case that the central axis of the initial material 2 displaces from the rotary axis of the support shaft 1. The centrifugal force Fs at the angular speed $\omega$ acts on the weight center C of the initial material 2, so that the swing occurs at the lower end of the initial material 2 in the direction of arrow in Fig. 1. Figs. 2A shows a condition immediately after attaching the initial material 2 to the lower end portion of the support shaft 1, and wherein the central axis of the initial material 2 deviates from the rotary axis of the support shaft 1 by an angle $\theta$. Fig. 2B illustrates a condition that balance is made by flexing the support shaft 1. Fig. 2C shows a condition that the lower end portion of the initial material 2 swings in the arrowed direction while the support shaft 1 is rotating. As described, when the central axis of the initial material 2 deviates from the rotary axis of the support shaft 1, the support shaft 1 having rigidity bends until the initial material 2 stands still at the moment balanced position. Under this condition, the lower end portion of the initial material 2 has the swing having the width S during rotation.

As manufacturing the optical fiber base material, when the swing of the lower end portion the initial material 2 during the VAD or OVD method occurs but has the relatively small width, glass particles are deposited eccentrically with respect to the center of the initial material. On the other hand, the swing is the relatively large width, the soot deposited material, which is growing glass particles up on the initial material, is forced to swingy rotate extremely in the circumferential direction.

Furthermore, as heating and sintering to vitrify the porous glass base material, if the lower end of the base material swings, the distance between the base material and the heat source varies, so that the received quantity of heat varies in the circumferential direction. Consequently, the vitrifying speed of the base material varies in the diameter direction, so that the initial material is positioned in the eccentric manner for the major diameter of the preform thus obtained.

The document JP-A-63139024 discloses a method for producing a base material for obtaining an optical fiber with reduced eccentricity.

SUMMARY OF THE INVENTION

It is an object of the present invention to provide a method for modifying a glass base material for an optical fiber which overcomes the above issues in the related art. This object is achieved by the combination described in the independent claim.

BRIEF DESCRIPTION OF THE DRAWINGS

Fig. 1 illustrates moments of force for a swingy rotation movement during rotation of an initial member hung by a support shaft.

Figs. 2A to 2C shows a swingy rotation movement along with rotation of an initial member hung by a support shaft with a certain deviation.

Fig. 3 illustrates an example of a manufacturing apparatus for an optical fiber base material.

Fig. 4 illustrates that a soot deposited material swings.

Fig. 5 shows a diagram of relationship between a swing width of a soot deposited material and polarized mode dispersion.

Fig. 6 shows a diagram of relationship between an uneven rotation of a soot deposited material and polarized mode dispersion.

Fig. 7 illustrates guide rollers serving as an example of a swing suppressing mechanism.

Fig. 8 illustrates a swing suppressing plate serving as another example of a swing suppressing mechanism.

Figs. 9A and 9B show a gas jetting as a further example of a swing suppressing mechanism.

Fig. 10 shows a diagram of relationship among a optical fiber length, a cutoff wave length and a mode field diameter.

Fig. 11 illustrates flatness for explaining a concept thereof.

Fig. 12 shows a diagram of a variation of rotation number with respect to time.

Fig. 13 shows a diagram of a variation of rotation number with respect to time according to Comparative Example 2.

Fig. 14 shows a diagram of a variation of depositing amount of glass particles for a moment.

Fig. 15 shows a diagram of flatness.

Fig. 16 shows a diagram of flatness according to Comparative Example 3.

Fig. 17 illustrates a rotatable structure.

Figs. 18A and 18B shows the rotatable structure as shown in Fig. 17 enlarged: Fig. 18A is a front sectional view thereof; and Fig. 18B is a side view thereof.

Figs. 19A to 19C illustrate arrangements of rotary shafts as examples of a rotatable structure.

Figs. 20A to 20D shows manufacturing stages using a rotatable structure.

Figs. 21A to 21D shows manufacturing stages using a grasping structure according to comparative examples.

Fig. 22 illustrates a porous glass material sintering apparatus.

Fig. 23 illustrates a perspective view in part of the porous glass material sintering apparatus.

Fig. 24 illustrates a sectional view of a hanging tool for a porous glass base material.

Fig. 25 illustrates a sectional view in part of the hanging tool for a porous glass base material.

Fig. 26 shows a correlation of a maximum eccentricity at sintering, with an angle $\theta$ between a slanting surface forming a pyramid recess portion and a side surface of a glass rod.

Fig. 27 illustrates another sintering apparatus.

Fig. 28 shows a diagram of a distribution of a refractive index difference $\Delta n(\%)$ with respect to the length direction of a glass base material for an optical fiber.

Figs. 29A to 29C shows a method for immersing in an etchant according to an embodiment of the present invention.

Fig. 30 shows a diagram of the relationship between the immersing speed, i.e. the etching surface up speed V and the immersing depth, i.e. the immersed length of the base material d, according to Example 12.

Fig. 31 illustrates an example of a base material manufacturing apparatus.

Fig. 32 illustrates a front view of a taper grinder, showing a condition that an end portion of a base material is ground to have a conical shape.

Fig. 33 illustrates a plan view of an orientation flat formed on a taper portion.

Fig. 34 illustrates a front view of a condition that the circumferential surface of the large diameter portion of a base material is smoothly ground by a columned grinder.

Fig. 35 illustrates a side view of a condition that the circumferential surface of the large diameter portion of a base material is smoothly ground.

Fig. 36 illustrates a plan view of a condition that the circumferential surface of the large diameter portion of a base material is smoothly ground.

Fig. 37 shows a diagram of measured results of optical characteristics of Example 13 and Comparative Example 10.

DETAILED DESCRIPTION OF THE INVENTION

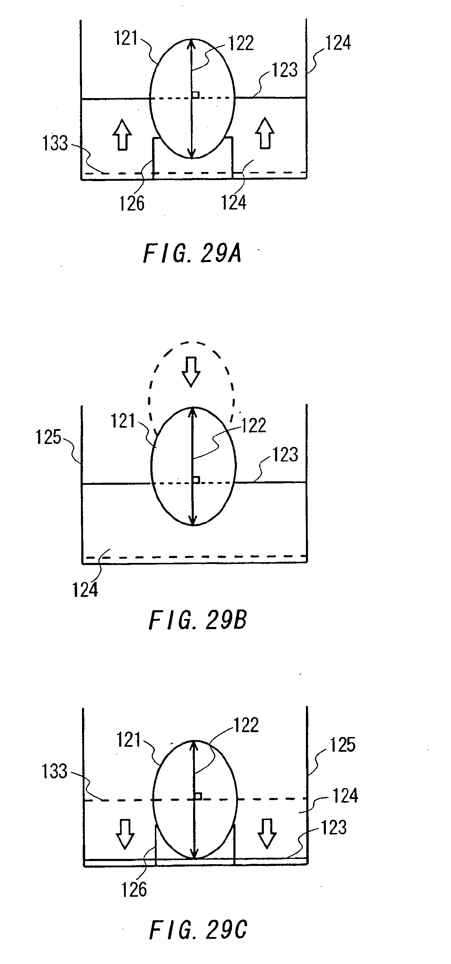

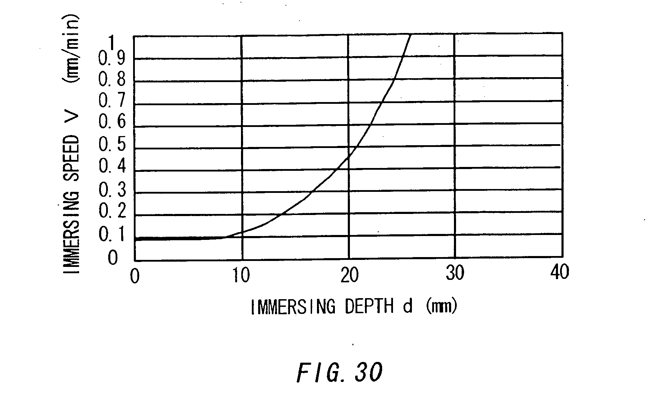

The invention will now be described referring to Figs 29A to 29C and 30 based on the preferred embodiments, which do not intend to limit the scope of the present invention, but exemplify the invention. All of the features and the combinations thereof described in the embodiment are not necessarily essential to the invention. The technical background and content helpful for understanding the invention is described referring to Figs. 1 to 28 and 31 to 37.

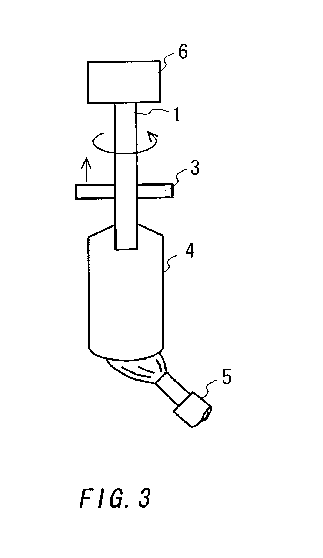

Fig. 3 is a explanatory figure illustrating an example of a manufacturing apparatus for an optical fiber base material. In Fig. 3, an end portion of a support shaft 1 grasps a soot deposited material 4 which is of a bar material, and the other end portion of the support shaft 1 connects to a motor 6. A swing suppressing mechanism 3 is provided with respect to the support shaft 1. The motor 6 drives to rotate the support shaft 1 grasping the soot deposited material 4 with a predetermined speed while the rotation is regulated by the swing suppressing mechanism 3. Under this condition, glass particles being supplied from a burner 5 are deposited to the soot deposited material 4 hanged by the support material 1.

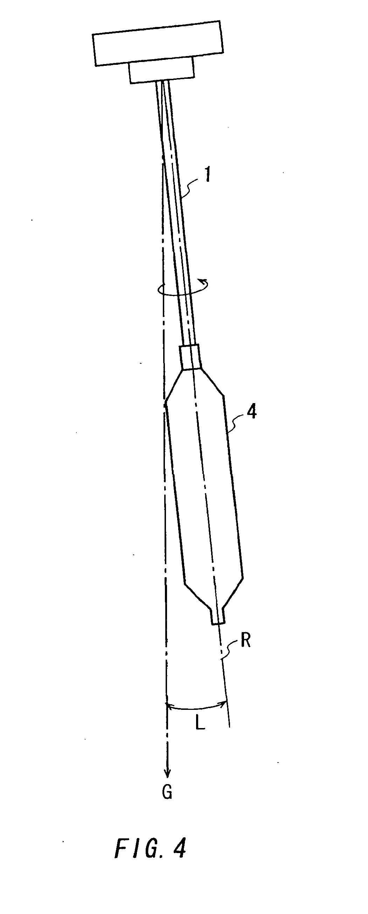

Fig. 4 illustrates that the soot deposited material 4 swings by the width L with respect to the gravity direction G while the soot deposited material 4 is being rotated around the rotational axis R.

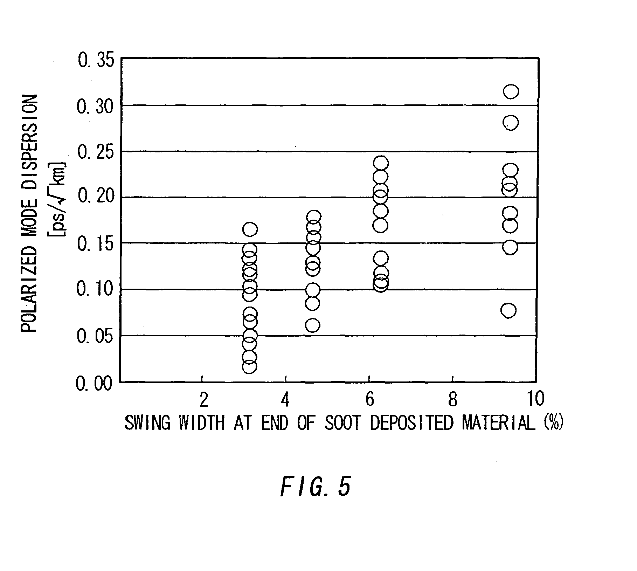

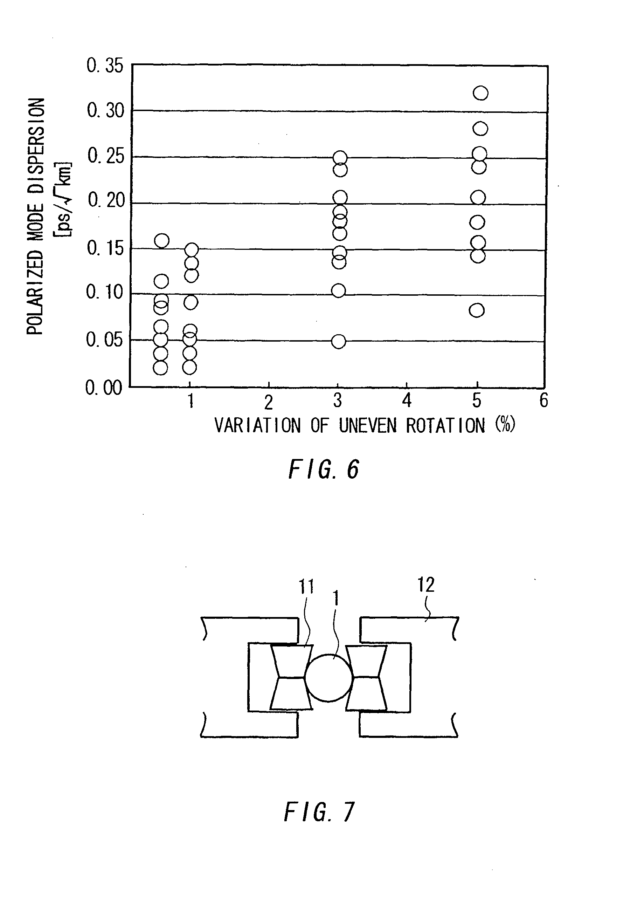

It has been found that the optical fiber obtained by being subjected to a transparent vitrifying process and elongation process of the soot deposited material 4 which grows up with such a swing has the large value of the polarized mode dispersion, almost in proportion to the width of the swing, as shown in Fig. 5. Furthermore, it has been found that the soot deposited material 4 growing up with an uneven rotation has the large value of the polarized mode dispersion of the obtained optical fiber as well as the swing, almost in proportional to the degree of the uneven rotation, as shown in Fig. 6.

Accordingly, it has been found that it is quite effective to suppress the swing and the uneven rotation of the soot deposited material 4 in order to make the polarized mode dispersion small.

In Fig. 5, the lateral axis thereof shows the ratio (%) of the swing width to the diameter of the soot deposited material. In Fig. 6, the lateral axis thereof shows the ratio (%) of the variation width of the uneven rotation with respect to the mean rotation number of the soot deposited material.

More specifically, the swing suppressing mechanism 3 is of a mechanism to reduce the swing at the growing portion of the soot deposited material 4. The swing suppressing mechanism 3 provides with a direct contact with the support shaft 1, or a gas jet to the soot deposited material 4 or the support shaft 1. According to providing with the swing suppressing mechanism 3 of the present embodiment, the swing at the growing portion can be suppressed as well as a singular point can be prevented from generating because the natural frequency of the unit of the soot deposited material along with the support shaft shifts higher.

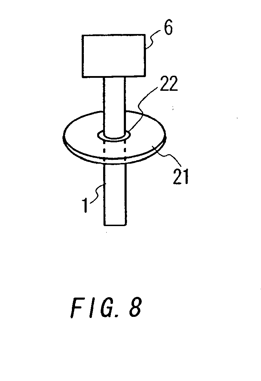

For instance, guide rollers 11 as shown in Fig. 7 or a plate member as shown in Fig. 8 is applicable to making a direct contact with the support shaft 1 so as to suppress the swing.

In Fig. 7, a pair of the guide rollers 11 are attached to respective roller holders 12. The guide rollers 11 makes a direct contact with the support shaft 1 while the support shaft 1 is moving up between the guide rollers 11 so that the swing at the growing portion of the soot deposited material 4 is suppressed.

In Fig. 8, the swing suppressing plate 21 has a hole which is tiny larger than the diameter of the support shaft 1. The support shaft 1 is put into the hole of the swing suppressing plate 21, and a gap between the hole and the support shaft 1 is stuffed with a filler 22 comprising a resin having a low frictional characteristic, for instance TEFLON. The shape of the swing suppressing plate 21 is preferably a circle so as to give a uniform force to the peripheral of the support shaft 1. The material of the swing suppressing plate 21 may be made of metal, resin or the like, and more preferably, Ni or vinyl chloride.

With respect to the position of the guide rollers 11 or the swing suppressing plate 21, the position, which is set between the upper end and the lower end of the support shaft 1, is suitably determined in view of the swing suppression effect or the utility of taking out the soot deposited material.

Moreover, in case of applying a direct contact with the support shaft 1 so as to suppress the swing, surplus glass particles sticking to the support shaft 1 may probably is peeled off by guide rollers 11 or a swing suppressing plate 21 of a swing suppressing mechanism 3, and the surplus particles thus peeled off may probably stick again to the soot deposited material 4 and make foams. Accordingly, it is preferable to provide with an exhaust duct below the guide rollers 11 or the swing suppressing plate 21 of the swing suppressing mechanism 3.

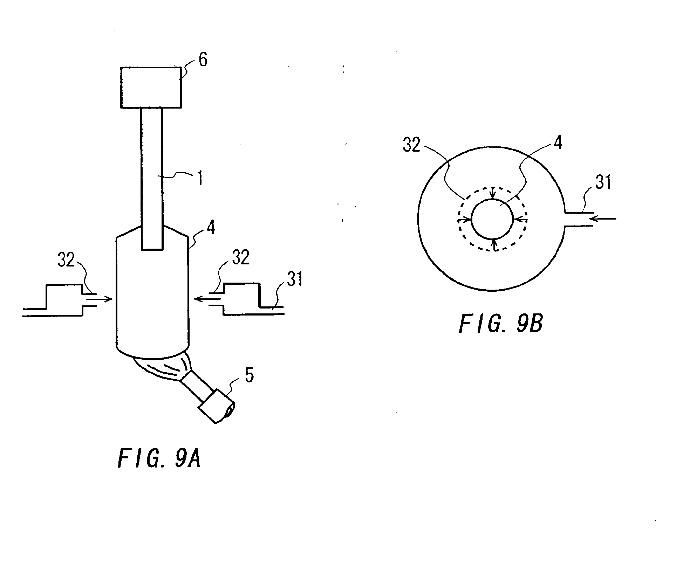

In case of applying a gas jet so as to suppress the swing, in Fig. 9A, for instance, an apparatus may include a gas intake 31 and a gas jet nozzle 32. The gas jet apparatus makes a gas supplied through the gas intake 31 blow at the soot deposited material 4 and/or the support shaft 1 via gas jet nozzle 32.

The material of the gas may be made of Ar, $N_2$, air or the like, and air may be most preferable in view of cost.

Moreover, an object at which the gas blows, which may be the soot deposited material 4 as well as the support shaft 1 on the contrary to the case of the direct contact described above, is suitably determined in view of the swing suppression effect or the airflow within the chamber.

The position of blowing the gas at an object, the support shaft for instance, may be arranged so as to give a uniform force to the peripheral of the object. Preferably, a swing suppressing mechanism 3 includes a gas intake 31 and gas jet nozzles 32 arranged at a doughnut shape portion. In this case, the object, that is the soot deposited material 4 or the support shaft 1, is to be installed in the center space of the swing suppressing mechanism 3 so that the gas uniformly blows at the peripheral of the object.

A glass base material manufacturing apparatus further includes a rotation controlling mechanism so as to suppress an uneven rotation during rotation of the support shaft hanging a bar material which is, for example an initial material or a soot deposited material.

Especially, the rotation controlling mechanism and method therefore may be applied to case where the depositing speed at the moment of glass particles is large since the degree of flatness of a porous glass base material is liable to deteriorate caused by uneven rotation.

A method for controlling the uneven rotation may include steps of detecting the uneven rotation from measurement of the rotation speed, and feeding it back to the motor. A method for preventing for the number of rotation variation from coinciding with integer number for one rotation of the soot deposited material may include a step of giving a random signal to the motor.

In the present embodiment, the variation of the rotation speed is regulated within 1.8% for the predetermined rotation number when the depositing speed at the moment of glass particles is equal to or larger than 8 g/sec. Accordingly, the variation of thickness at small regions in the deposit layer becomes equal to or smaller than 1.8% whole over the deposit layer. In this disclosure, the unevenness of rotation speed with respect to the predetermined value is represented by a ratio of the difference between the maximum and minimum speeds to the predetermined speed. The variation of rotation speed is represented by (((the maximum rotation number)-(the minimum rotation number))/(the predetermined rotation number))*100 (%).

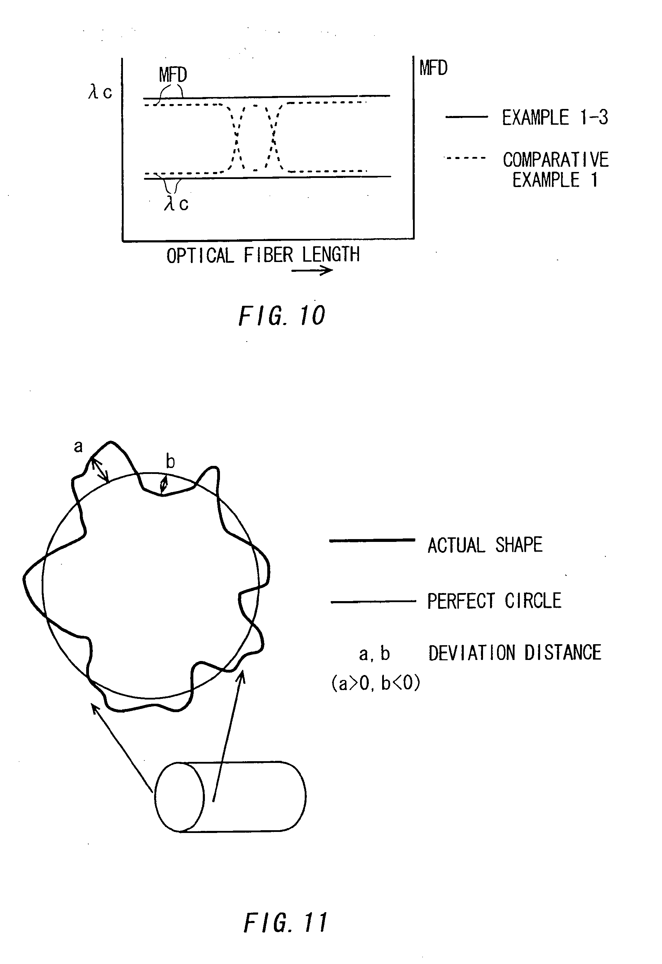

Consequently, the surface condition of the soot deposited material growing up with the prescribed glass particles is good in the length direction as well as the radial direction. The surface condition is represented by the degree of flatness. As shown in Fig. 11, the degree of flatness is expressed by a deviation from a perfect circle by which a cut section shape of the object, that is, the soot deposited material, optical fiber base material, or quartz tube, is approximated. In Fig. 11, the symbol (+) indicates the actual surface being outside the perfect circle (convex), and the symbol (-) indicates the actual surface being inside the perfect circle (concave).

The quartz tube or optical fiber which is obtained after a transparent vitrifying process on the soot deposited material having the good surface flatness has the good circularity, and no variation of the cutoff wavelength nor mode field diameter occurs.

Examples according to the present embodiment will be explained.

REFERENCE EXAMPLE 1

An optical fiber base material was manufactured via VAD method, using an optical fiber manufacturing apparatus, as shown in Fig. 7. In the optical fiber manufacturing apparatus, guide rollers were positioned between upper and lower ends of a support shaft which moved up while rotating.

Under this conditions, no singular point was found in the optical fiber base material thus manufactured. As shown in Fig. 10, the cutoff wave length ($\lambda_c$) and mode field diameter (MFD) of the optical fiber obtained by drawing the above base material indicated the stable characteristic along the length direction.

REFERENCE EXAMPLE 2

An optical fiber base material was manufactured via VAD method, using another optical fiber manufacturing apparatus, as shown in Fig. 8. In the optical fiber manufacturing apparatus, a disk shape plate having a hole being little larger than a support shaft was positioned between upper and lower ends of the support shaft which moved up while rotating, the support shaft was inserted into the hole of the disk shape, and a gap between the disk shape plate and the support shaft therein was stuffed with TEFLON.

Under this conditions, no singular point was found in the optical fiber base material thus manufactured. As shown in Fig. 10, the cutoff wave length ($\lambda_c$) and mode field diameter (MFD) of the optical fiber obtained by drawing the above base material indicated the stable characteristic along the length direction.

REFERENCE EXAMPLE 3

An optical fiber base material was manufactured via VAD method, using another optical fiber manufacturing apparatus in which a gas blew at the soot deposited material from the peripheral thereof, as shown in Figs. 9A and 9B.

Under this conditions, no singular point was found in the optical fiber base material thus manufactured. As shown in Fig. 10, the cutoff wave length ($\lambda_c$) and mode field diameter (MFD) of the optical fiber obtained by drawing the above base material indicated the stable characteristic along the length direction.

COMPARATIVE EXAMPLE 1

An optical fiber base material was manufactured via VAD method, using an optical fiber manufacturing apparatus which did not have any swing suppressing mechanism positioned between an upper end a support shaft which moves up while rotating and a growing up potion of the soot deposited material.

Under this conditions, a singular point was found in the optical fiber base material thus manufactured. As shown in Fig. 10, the cutoff wave length ($\lambda_c$) and mode field diameter (MFD) of the optical fiber obtained by drawing the above base material varied along the length direction.

REFERENCE EXAMPLE 4

After an inclination of a rotation axis of a support shaft which supports and rotates an initial material was adjusted and the inclination angle was lessened up to 0.2 degree, a soot core material having a diameter of 32 mm was manufactured such that glass particles were deposited via VAD method. Under this condition, the swing width at a growing up portion of the soot core material was equal to or less than 5 mm. This material was subjected to a vitrifying process, and as evaluating the non-circularity of the core shape thereof, the non-circularity was about 1.2 % in average. Fifteen (15) core materials were successively manufactured, and optical fiber preforms were obtained from the core materials.

The polarized mode dispersion of optical fibers obtained by drawing these optical fiber preforms had values of 0.10 in psec/km$^{1/2}$ in average, and 0.17 psec/km$^{1/2}$ in maximum.

Besides, the values of polarized mode dispersion of the optical fiber is preferably equal to or less than 0.2 psec/km$^{1/2}$ because the polarized mode dispersion probably increases at assembling the optical fiber cable.

REFERENCE EXAMPLE 5

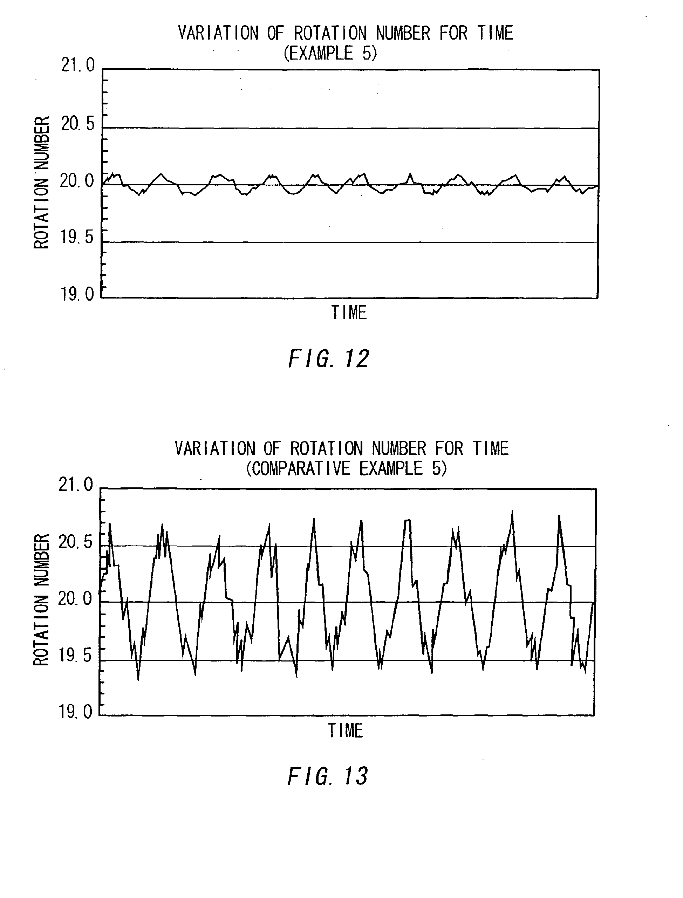

A rotational mechanism with high accuracy for a support shaft supporting and rotating an initial material was applied to a manufacturing apparatus. In this case, after a variation of uneven rotation of a support shaft was adjusted ± 0.01 rpm for the rotation number of the shaft of 20 rpm in average, a soot core material having a diameter of 32 mm was manufactured such that glass particles were deposited via VAD method, as shown in Fig. 12. This material was subjected to a vitrifying process, and as evaluating the non-circularity of the core shape thereof, the non-circularity was about 0.9 % in average. Twenty (20) core materials were successively manufactured. The polarized mode dispersion of optical fibers obtained from these core materials had values of 0.08 in psec/km$^{1/2}$ in average, and 0.15 psec/km$^{1/2}$ in maximum.

REFERENCE EXAMPLE 6

In the rotational mechanism with high accuracy as described in Example 5, as well as the manufacturing apparatus described in Example 4, a deviation of a rotation axis of the support shaft from the gravity direction was measured, and it was 0.8 degree. The deviation was adjusted and lessened up to 0.2 degree, so that a swing width at the end portion of a soot deposited material became equal to or less than 0.5 mm. Under this condition, a soot core material having a diameter of 32 mm was manufactured. This material was subjected to a vitrifying process, and as evaluating the non-circularity of the core shape thereof, the non-circularity was about 0.2 % in average. Twelve (12) core materials were manufactured. The polarized mode dispersion of optical fibers obtained from these core materials had values of 0.04 in psec/km$^{1/2}$ in average, and 0.07 psec/km$^{1/2}$ in maximum.

COMPARATIVE EXAMPLE 2

A soot core material having a diameter of 32 mm was manufactured via VAD method such that glass particles were deposited thereon. In this case, a deviation of a rotation axis of the support shaft from the gravity direction was 1.2 degree, so that a swing width at the end portion of a soot deposited material generated a width of 3 mm. Furthermore, the rotation number of the shaft had a periodical variation of ±0.5 rpm for the rotation of 20 rpm in average, as shown in Fig. 13. The core materials thus formed were subjected to a vitrifying process, and as evaluating the non-circularity of the core shape thereof, it was found that many of them had the non-circularity of over 2 %. The polarized mode dispersion of optical fibers obtained by drawing these optical fiber preforms had values of 0.22 in psec/km$^{1/2}$ in average, and 0.32 psec/km$^{1/2}$ in maximum. Such optical fibers having large polarized mode dispersion values can not satisfy a forthcoming demand of higher transmission density by market, as described above.

REFERENCE EXAMPLE 7

A quartz bar target material which had a core and a cladding in part, and the length of 500 mm and the major diameter of 25 mm via VAD method was prepared, and attached to a grasping mechanism. $SiCl_4$ of 10 1/min., $O_2$ of 100 1/min. and $H_2$ of 50 1/min. were supplied to a burner, and glass particles generated from them with flame were deposited such that the burner and the target material were relatively moved at 10 mm/min. while the target material was being rotated of a prescribed rotation number of 100 rpm. A porous glass base material for an optical fiber having the major diameter of 150 mm was obtained. In this example, an uneven rotation was controlled such that the uneven rotation was detected and a signal thus detected was fed back to a rotational motor.

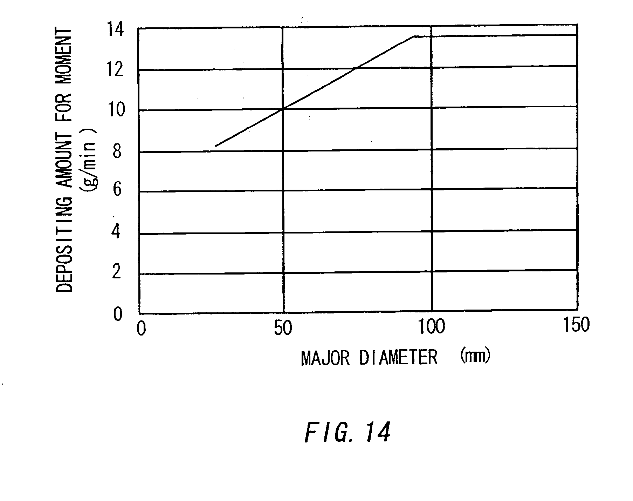

Under this condition, the depositing amount of glass particles for a moment is shown in Fig. 14.

As the uneven rotation of the target material during the process of depositing glass particles were measured, the variation was 1.8 (%) in maximum, that is, from 99.10 rpm to 100.90 rpm.

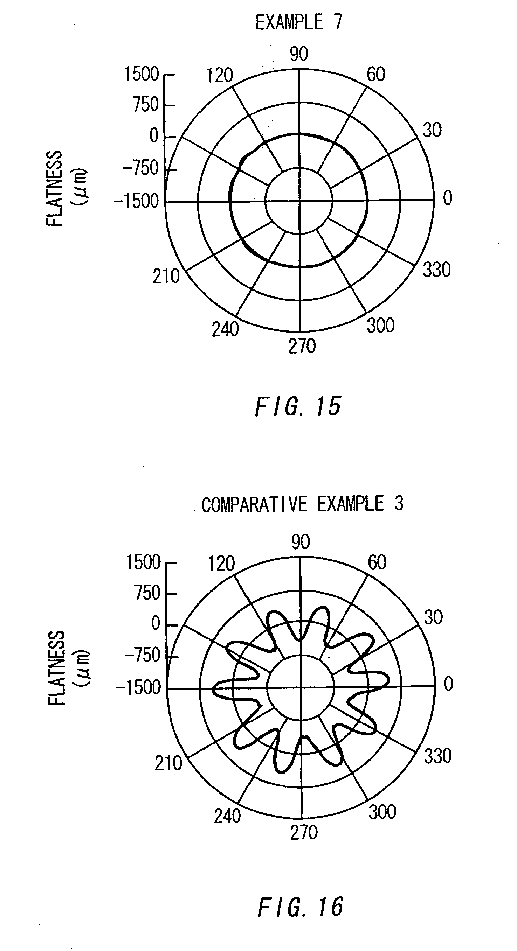

Flatness of a surface of the soot deposited material of Example 7 is shown in Fig. 15. The flatness of a surface of the soot deposited material thus formed was equal to or smaller than ±25 μm. Cracking of the soot deposited material during the depositing process happened zero (0) time in fifteen (15) times of manufacturing.

Subsequently, the soot deposited material thus formed was subjected to a vitrifying process, and made a base material for optical fiber.

Flatness of a surface of the base material after the vitrifying process was $\pm 10$ μm.

A variation of the cutoff wave length ($\lambda_c$) of the optical fiber obtained by drawing the above base material was 2 nm, and a variation of the mode field diameter (MFD) thereof was 0.009 μm, in good conditions.

COMPAATIVE EXAMPLE 3

A quartz bar target material which is similar to that of Example 7 was prepared, and attached to a grasping mechanism. Under the same conditions of prescribed rotation number and gas as Example 7, and glass particles generated from them with flame were deposited such that the burner and the target material were relatively moved at 10 mm/min. A porous glass base material for an optical fiber having the major diameter of 150 mm was obtained. In this example, no control of an uneven rotation was carried out.

Under this condition, the depositing amount of glass particles for a moment was similar to that of Example 7.

As the uneven rotation of the target material during the process of depositing glass particles were measured, the variation was 2 (%) in maximum, that is, from 99 rpm to 101 rpm.

Flatness of a surface of the soot deposited material of Comparative Example 3 is shown in Fig. 16. The flatness of a surface of the soot deposited material thus formed was equal to or larger than $\pm 125$ μm. Cracking of the soot deposited material during the depositing process happened two (2) times in fifteen (15) times of manufacturing.

Subsequently, flatness of a surface of a base material after a vitrifying process to the soot deposited material was $\pm 60$ μm.

A variation of the cutoff wave length ($\lambda_c$) of the optical fiber obtained from the above base material was 40 nm, and a variation of the mode field diameter (MFD) thereof was 0.105 μm, in poor conditions for practical applications.

In the examples described above, the VAD method is taken for instance. However, the OVD and MCVD method may be applicable as well.

The manufacturing apparatus for an optical fiber base material according to the present embodiment suppresses the swing of the end portion of the soot deposited material as well as shifts higher the proper frequency of the soot deposited material along with the support shaft, so that singular points can be prevented from generating. Furthermore, in the core material manufacturing process, the factors for enlarging the non-circularity of the core shape are regulated, so that preforms which make optical fibers having polarized mode dispersion can be manufactured.

Moreover, according to the present embodiment, the rotation speed of the target material varies in the small width for the prescribed value, so that the variation of thickness of the deposited layer in local regions can be suppressed. Still further, no cracking occurs during the glass particles depositing process, and soot deposited materials having the good flatness can be manufactured. The optical fibers which are obtained by the transparent vitrifying process to the soot deposited materials having the good flatness have the good circularity, as well as the cutoff wave length and the mode field diameter thereof do not fluctuate.

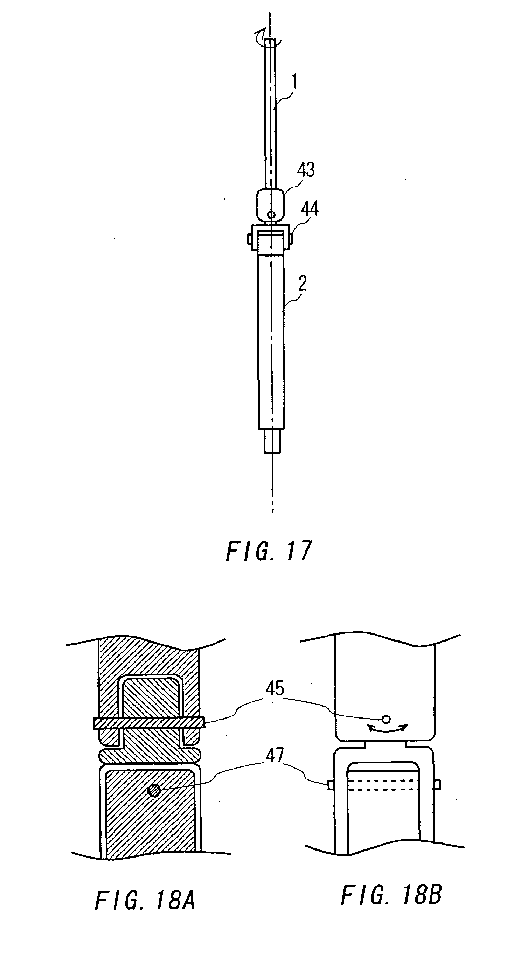

Fig. 17 illustrates a rotatable structure. In Fig. 17, a rotatable structure 43 is provided at a lower portion of s support shaft 1 which rotates. A connecting member 44 is attached to a lower portion of the rotatable structure 43, and hangs an initial material 2 which is of a bar material. The rotatable structure 43 is enlarged in Figs. 18A and 18B. Fig. 18A is a front sectional view thereof; and Fig. 18B is a side view thereof. The rotatable structure 43 as shown in Figs. 18A and 18B has a rotary shaft 45 which allows the initial material 2 rotatable in a direction indicated by an arrow in Fig. 18B. Furthermore, the connecting member 44 as shown in Figs. 18A and 18B has a rotary shaft 46 which allows the initial material 2 rotatable in another direction than that of the rotatable structure 43. However, the present embodiment is not limited to the configuration described above, and one rotatable direction by the rotatable structure 43 may be possible. It is preferable, as shown in Figs. 18A and 18B, that the initial material has another rotatable direction via the rotary shaft 46 of the connecting member 44.

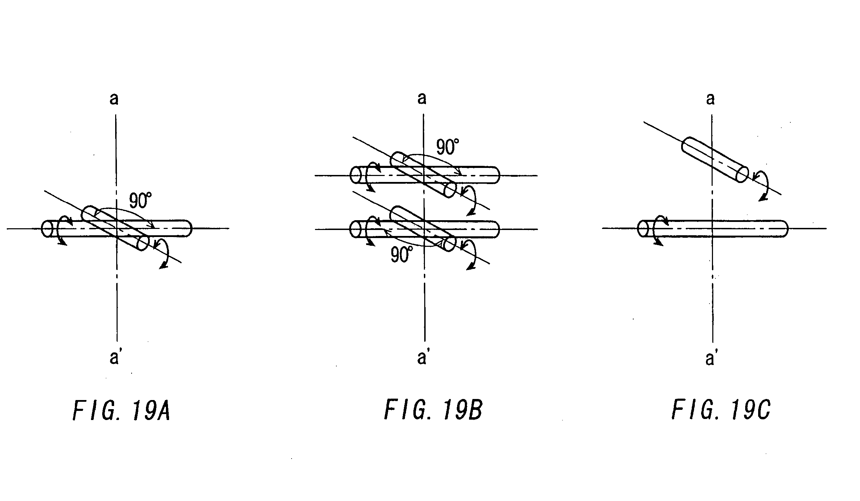

Figs. 19A to 19C illustrate arrangements of rotary shafts as examples of rotatable structures according to the present embodiment.

Fig. 19A shows an arrangement by example that two rotary shafts are perpendicular to each other on a plane being perpendicular to the central axis a-a' of the support shaft 1, that is, two shafts on one plane.

Fig. 19B shows another arrangement by example that two rotary shafts are perpendicular to each other on each of two planes being perpendicular to the central axis a-a' of the support shaft 1, that is, four shafts on two planes.

Fig. 19C shows another arrangement by example that two rotary shafts, each of them is perpendicular to the central axis a-a' of the rotary shaft 1, and have a certain distance from one to another along the direction of the central axis a-a', that is, two shafts in vertical. In this case, it is arranged such that an angle formed by the two shafts is to be 360/(2n) degree, where n is the number of rotary shafts.

Examples according to the present embodiment will be explained.

REFERENCE EXAMPLE 8

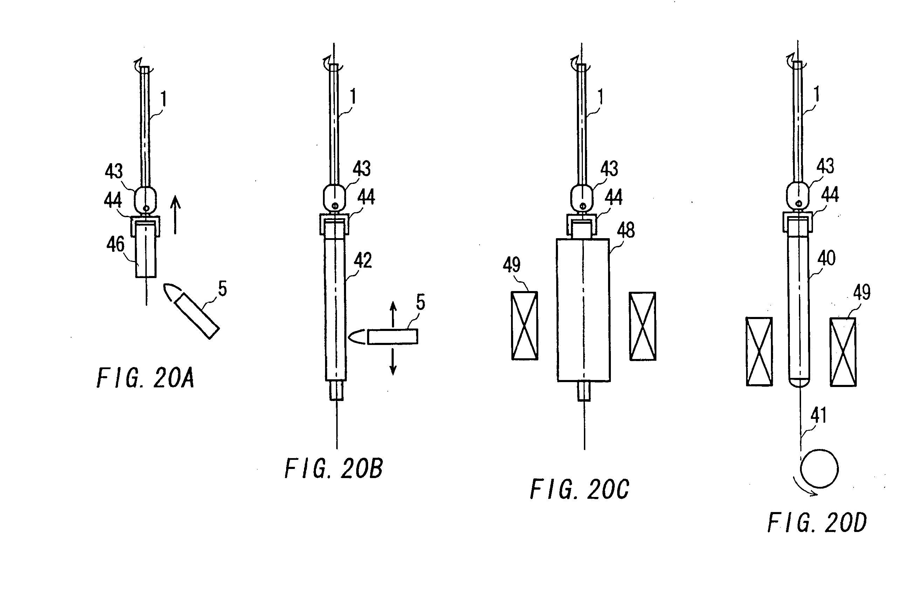

An initial rod 6 as an initial material was connected to a support shaft 1 via VAD method, as shown in Fig. 20A. In this process, the arrangement of two shafts on one plane as shown in Fig. 19A was applied to a rotatable structure 43.

In a condition that the initial rod 6 was rotated at 10 rpm, no swing was found at a lower end portion of the initial rod 6. Sequentially, $O_2$ of 10 SLM, $H_2$ of 20 SLM and $SiCl_4$ of 1.5 SLM, which were fuel gas and glass material, were supplied by two burners 5, and glass particles generated from them were deposited while the initial rod 6 was lifting up at 1.0 mm/min. A porous glass base material 48 for an optical fiber having the total length of 500 mm and the major diameter of 25 mm was obtained.

The glass base material 48 thus obtained, which was connected to a support shaft 1 set in a transparent vitrifying apparatus as shown in Fig. 20C, was heated with a heater 49 to vitrify. Thus a preform 40 for a step index single mode optical fiber was obtained.

In this process, the arrangement of two shafts on one plane as shown in Fig. 19A was applied to a rotatable structure 43, and the swing width during rotation was equal to or less than 0.01 mm.

In next, the preform thus obtained was hung from a support shaft 1 set in an elongating apparatus of an optical fiber as shown in Fig. 20D. The arrangement of two shafts on one plane was applied to a rotatable structure 43. An inclination of the preform 40 from the vertical direction was equal to or less than 1/1000.

The eccentricity of an optical fiber by drawing the preform 40 was 0.0125 $\mu$m for the major diameter of 125 $\mu$m, and it was enough small for practical applications. Moreover, transmission loss at bond portions where optical fibers thus obtained were bonded by the electrical discharge fusion bond was 0.005 db/km for one bond portion, in good condition.

REFERENCE EXAMPLE 9

A porous glass base material having the total length of 700 mm and the major diameter of 45 mm was obtained via VAD method similar to Example 8. In this case, three burners were used, and $O_2$ of 30 SLM, $H_2$ of 60 SLM and $SiCl_4$ of 4.5 SLM, which were fuel gas and glass material, were supplied.

The glass base material thus obtained, which was connected to a support shaft set in a transparent vitrifying apparatus as shown in Fig. 20C, was heated with a heater to vitrify. Thus a core rod for a step index single mode optical fiber was obtained. In this process, the arrangement of two shafts in vertical as shown in Fig. 19C was applied to a rotatable structure, and the swing width during rotation was equal to or less than 0.01 mm.

Sequentially, the core rod thus obtained was connected to hang by a support shaft set in an OVD apparatus as shown in Fig. 20B. In this process, the arrangement of four shafts on two plane in Fig. 19B was applied to a rotatable structure. In a condition that the core rod was rotated at 10 rpm, no swing was found at a lower end portion of the core rod.

To this core rod, $O_2$ of 30 SLM, $H_2$ of 60 SLM and $SiCl_4$ of 5 SLM, which were fuel gas and glass material, were supplied by a burner, glass particles generated from them were deposited such that the burner and the core rod were relatively reciprocated at 300 mm/min. A porous glass base material for an optical fiber having the total length of 700 mm and the major diameter of 100 mm was obtained.

The base material thus obtained was connected to a support shaft set in a vitrifying apparatus as shown in Fig. 20C, and heated with a heater to vitrify. Thus, a preform for a step index single mode optical fiber was obtained. In this process, the arrangement of two shafts on one plane as shown was applied to a rotatable structure, and the swing width during rotation was equal to or less than 0.01 mm.

In next, the preform thus obtained was hung from a support shaft set in an elongating apparatus of an optical fiber as shown in Fig. 20D. The arrangement of two shafts on one plane was applied to a rotatable structure 43. An inclination of the preform 40 from the vertical direction was equal to or less than 1/1000.

The eccentricity of an optical fiber by drawing the preform was 0.0120 $\mu$m for the major diameter of 125 $\mu$m, and it was enough negligible small for practical applications. Moreover, transmission loss at bond portions where optical fibers thus obtained were bonded by the electrical discharge fusion bond was 0.005 db/km for one bond portion, in good condition.

COMPARATIVE EXAMPLE 4

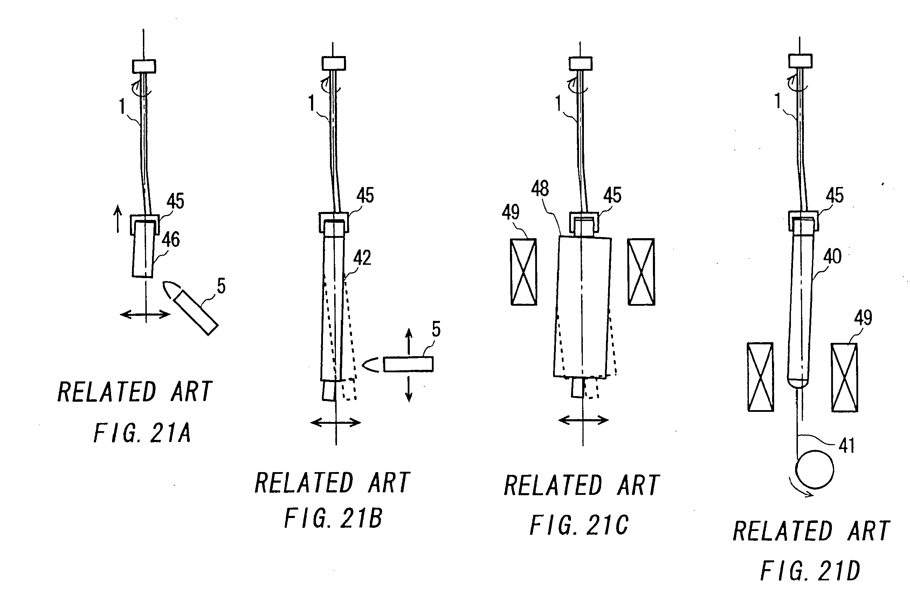

A porous glass base material, which was formed via VAD similar to Example 8, was connected by a conventional grasping structure to a support shaft of a vitrifying apparatus as shown in Fig. 21C. In this process, a swing width during rotation was 2.5 mm at the lower end portion of the base material. In next, after the base material is heated and vitrified, a preform for step index single mode optical fibers was obtained. Further, a drawing process was carried out under the same conditions as Example 8. The eccentricity of an optical fiber thus formed was 1.0 $\mu$m for the major diameter of 125 $\mu$m, and it was large. Moreover, transmission loss at bond portions where optical fibers thus obtained were bonded by the electrical discharge fusion bond was 0.35 db/km for one bond portion, and it is too large to serve as an ordinal data transmission line.

COMPARATIVE EXAMPLE 5

A porous glass base material obtained via VAD method similar to Example 9 was heated with a heater to vitrify under the same condition as Example 9. Thus a core rod for a step index single mode optical fiber was obtained.

Sequentially, the core rod thus obtained was connected by a conventional grasping structure to a support shaft set in an OVD apparatus as shown in Fig. 21B. In a condition that the core rod was rotated at 10 rpm, a swing was 15 mm at a lower end portion of the core rod. Glass particles were deposited to this core rod under the same conditions as Example 9, and then a porous glass base material having the total length of 700 mm and the major diameter of 100 mm was obtained.

The glass base material was heated under the same conditions as Example 9 to vitrify to make a preform, and the preform thus obtained was drawn under the same conditions as Example 9 to form step index single mode optical fibers. The eccentricity of an optical fiber was 1.3 $\mu$m for the major diameter of 125 $\mu$m, and it was enough and it was large. Moreover, transmission loss at bond portions where optical fibers thus obtained were bonded by the electrical discharge fusion bond was 0.4 db/km for one bond portion, and it is too large to serve as an ordinal data transmission line.

COMPARATIVE EXAMPLE 6

A porous glass base material obtained via VAD method similar to Example 9 was heated with a heater to vitrify under the same condition as Example 9. Thus a core rod for a step index single mode optical fiber was obtained.

Sequentially, the core rod thus obtained was connected to a support shaft set in an OVD apparatus as shown in Fig. 21B. In this process, the arrangement of two shafts on one plane was applied to a rotatable structure, but an angle made by the two shafts was 30 degree. In a condition that the core rod was rotated at 10 rpm, a swing was 15 mm at a lower end portion of the core rod. Glass particles were deposited to this core rod under the same conditions as Example 9, and then a porous glass base material having the total length of 700 mm and the major diameter of 100 mm was obtained.

The glass base material was heated under the same conditions as Example 9 to vitrify to make a preform, and the preform thus obtained was drawn under the same conditions as Example 9 to form step index single mode optical fibers. The eccentricity of an optical fiber was 1.1 $\mu$m for the major diameter of 125 $\mu$m, and it was enough and it was large. Moreover, transmission loss at bond portions where optical fibers thus obtained were bonded by the electrical discharge fusion bond was 0.38 db/km for one bond portion, and it is too large to serve as an ordinal data transmission line.

According to the present embodiment, no swing generates when the glass base material is manufactured via either OVD or VAD method such that the glass particles are deposited to the initial material hung during rotation, so that the glass particles may not be deposited eccentrically with respect to the central axis of the initial material. Furthermore, a dangerous situation that the soot deposited material is swingy rotated largely in the circumferential direction does not occur, so that it is not necessary to discontinue operations of the manufacturing apparatus during depositing the glass particles. Still further, since the glass particles are deposited in no eccentric manner with respect to the central axis of the initial material, the light transmission core portion of the optical fiber preform made of the porous glass base material has a extremely small eccentricity with respect to the outer circumference of the base material. Consequently, for the optical fiber thus manufactured ,the signal intensity loss at the bond portions caused by the eccentricity of the core portion can be suppressed well, and the polarized dispersion characteristic can be good.

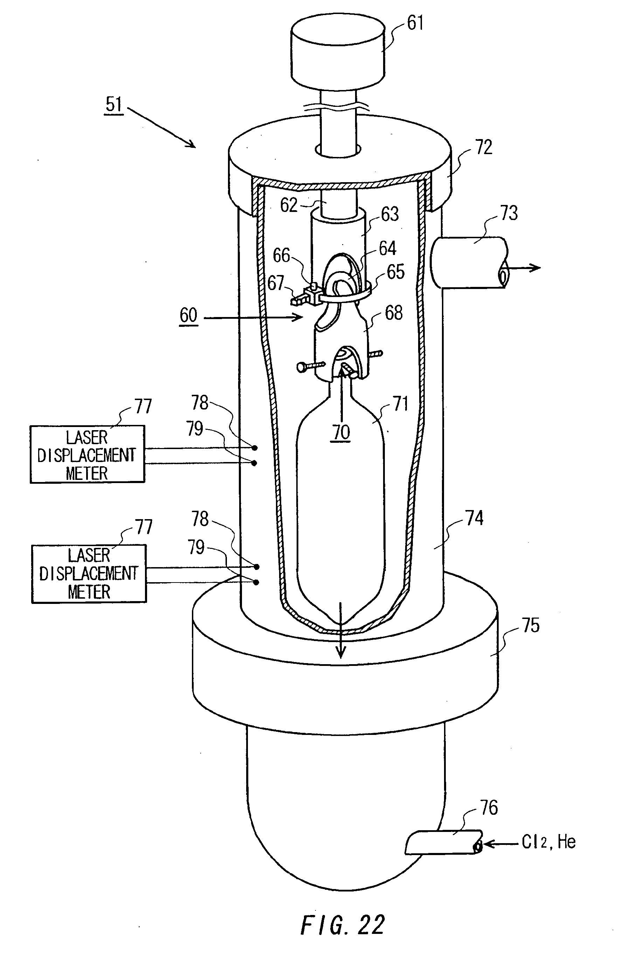

Fig. 22 is a perspective view of a porous glass material sintering apparatus.

The sintering apparatus 51 has a reactor 74 made of quartz and a heating furnace 75 positioned at the outer circumference of the reactor 74, as shown in Fig. 22. A lid 72 having a hole at the center thereof is put on the upper portion of the reactor 74. A support shaft 62 which penetrates the hole connects to an adjustable joint 60 which hangs a porous glass base material 71 as a bar material being inserted into the reactor 74. The upper end of the support shaft 62 connects to a motor 61 which drives to rotate the support shaft 62. The motor 61 moves the support shaft 62 down while the motor 61 rotates the support shaft 62 during a sintering process.

The adjustable joint 60 has an upper clamp 63, a lower clamp 68 and a ball 64. A forked end which bends at a lower portion of the upper clamp 63 pinches the ball 64. A forked end of the lower clamp 68 diagonally faces to the forked end of the upper clamp 63, and pinches the ball 64 as well. An adjustable joint fastener 65 includes a band shape portion, a hole portion at one end thereof and a tooth portion 67 at the other end being inserted into the hole portion, such that the adjustable joint fastener 65 winds over both forked ends. The upper clamp 63 and the lower clamp 68 are tightened with each other by the adjustable joint fastener 65.

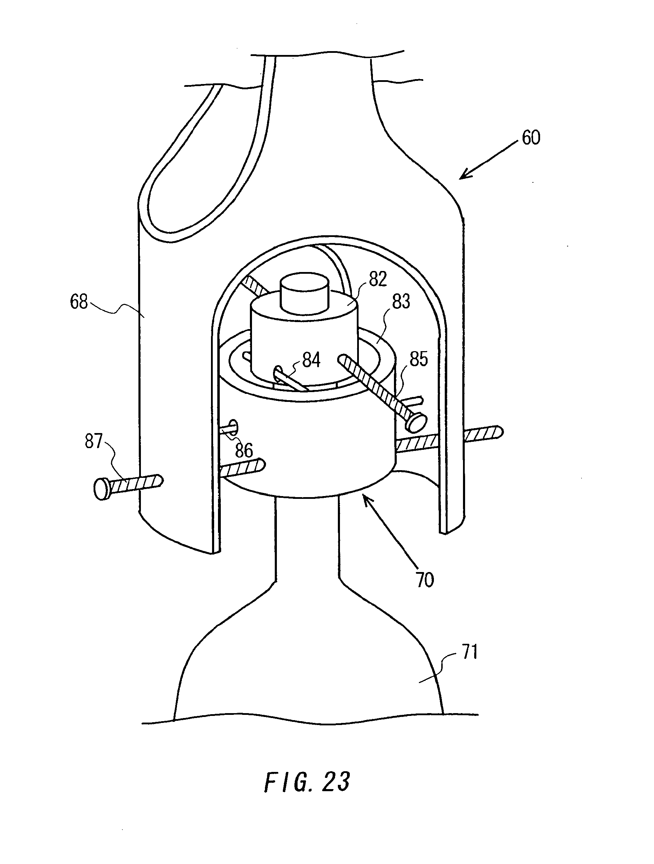

An X-Y stage 70 is attached to a lower portion of the lower clamp 18, so as to reduce the difference between the central axis of the base material 71 and the rotary shaft of the motor 61 in the horizontal direction. The X-Y stage 70 includes an X-direction moving ring 82 holding the base material 71 and, outer thereof, a Y-direction moving ring 83 holding the X-direction moving ring 82, as shown in Fig. 23.

An X-direction screw rod 85 is screwed into both the X-direction moving ring 82 and the Y-direction moving ring 83. An X-direction guide rod 84 penetrates into the X-direction moving ring 82, and the both ends of the X-direction guide rod 84 are fastened to the Y-direction moving ring 83.

A Y-direction screw rod 87 is screwed into both the Y-direction moving ring 83 and the lower clamp 68. An Y-direction guide rod 86 penetrates into the Y-direction moving ring 83, and the both ends of the Y-direction guide rod 86 are fastened to the lower clamp 68.

A laser source 78 and a photo receiver 79, both connecting to a laser displacement meter 77, are positioned at the side surface of the reactor 74 in height near the upper end of the large diameter portion of the base material 71. Another laser source 78 and another photo receiver 79 are provided in height near the lower end of the large diameter portion of the base material 71 as well.

A mixed gas intake 76 for introducing a mixed gas of chlorine gas and helium gas is arranged at the lower end portion of the reactor 24, and an exhaust duct 73.

The sintering apparatus 51 is used as follows.

At first, the motor 61 drives to rotate the base material 21. Distances are measured by use of two laser displacement meters, based on triangulation principle. The swing width of the base material 71 is calculated from these distances. If the distances measured by two points fluctuate in sync of a period of rotation of the base material 71, it is recognized that the center axis of the base material 71 deviates from the rotary shaft of the motor 61 in either axial or horizontal direction.

When any deviations are found, the drive of the motor 61 is stopped, and the deviations are to be adjusted.

In case that the central axis of the base material 71 deviates from the rotary shaft of the motor 61 in the axial direction, that is, the central axis of the base material 71 inclines with respect to the direction of the rotary shaft of the motor 61, such a deviation is to be adjusted. A screw 66 of the adjustable joint fastener 65 is revolved, so that the adjustable joint fastener 65 is released from fastening. Under this condition, the deviation of the central axis of the base material 71 in the axial direction is adjusted. After that, the screw 66 is reversely revolved, so that the adjustable joint fastener 65 is tightened and the upper clamp 63 and the lower clamp 68 are fastened again.

In case that the central axis of the base material 71 displaces from the rotary shaft of the motor 61 in the horizontal direction, such a displacement is to be adjusted. The X-direction moving ring 82 is moved by revolving the X-direction screw rod 85 of the X-Y stage, or the Y-direction moving ring 83 is moved by revolving the Y-direction screw rod 87, so that the displacement, i.e. deviation of the central axis of the base material 71.

The motor 61 drives again, and the distances are measured by use of two laser displacement meters, so that the deviations are derived therefrom. The adjustment of the deviations are repeated until no deviation is found because the central axis of the base material 71 is coincide with the rotary shaft of the motor 61, that is, the swing widths of the base material 71 derived from the measured distances are coincide with the major diameter of the base material 71.

After no deviation is found because the central axis of the base material 71 is coincide with the rotary shaft of the motor 61, the sintering process starts performing. Chlorine gas and helium gas are introduced through the mixed gas intake 76 into the reactor 24. The exhaust process starts with driving an exhaust fan, not shown, connecting with the exhaust duct 73. The base material 71 is heated up to about 1500 centigrade by the heating furnace 75. The motor 61 is driven, and the base material 71 is moved down while rotating. As the base material 71 passes by the heating furnace 75, the base material 71 is sintered and achieves the dehydration and vitrifying process.

The base material 71 may pass by the heating furnace 75 such that the base material 71, which is inserted at the bottom of the reactor 24, is moved up.

REFERENCE EXAMPLE 10

Fifty (50) porous glass base materials having the diameter of 200 mm and the length of 200 mm manufactured by OVD method were prepared. Deviations are adjusted every time when the base material was loaded to the joint, before the sintering process. The eccentricity of the base materials thus sintered was 0.04% in average, and 0.11% in maximum, and it was quite small. It was found that none of them bent.

COMPARATIVE EXAMPLE 7

For comparison, fifty (50) base material were subjected to the sintering process under the same conditions as Example 10, except for no adjustment of deviations. The eccentricity of the base materials thus sintered was 0.12% in average, and 0.32% in maximum. It was found that twenty six (26) of them had the large bent which were necessary to be modified by a burner or the like.

As apparent from the above description, the sintering apparatus for a porous glass base material according to the present embodiment can carry out the sintering process for the base material without the large eccentricity nor bend. An optical fiber obtained by drawing the base material thus manufactured has the small eccentricity and the small connecting loss. Moreover, the ratio of core to cladding in thickness and optical fiber characteristics are uniformity, and superior quality is achieved.

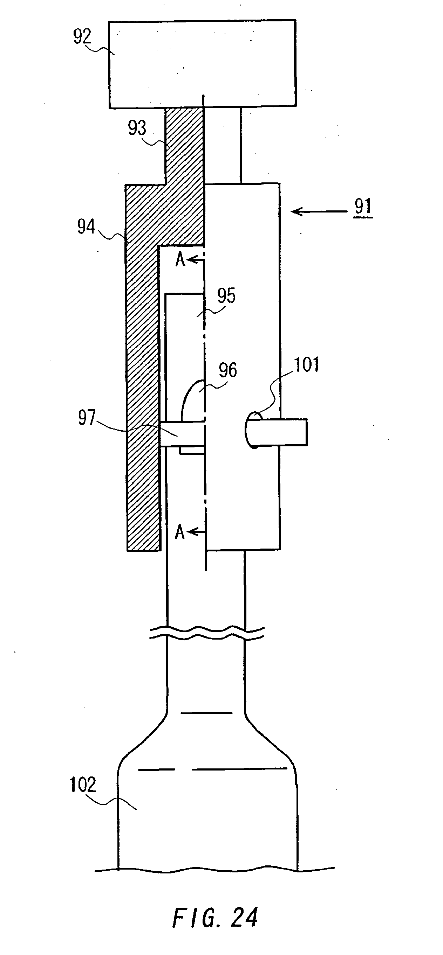

Fig. 24 illustrates a sectional view of a hanging tool for a porous glass base material.

The hanging tool 91 for a base material has a tubular portion 94 and a shaft 93 at the upper end of the tubular portion 94. The shaft 93 connects to a device 92, for instance, which is a motor for moving a base material up and down while rotating the same.

A glass rod 95 which has a major diameter being slightly smaller than the minor diameter of the tubular portion 94 is inserted into the tubular portion 94 with a certain margin. A pyramid recess portion 96 in which the lower recesses deeper is formed from a side surface of the glass rod 95.

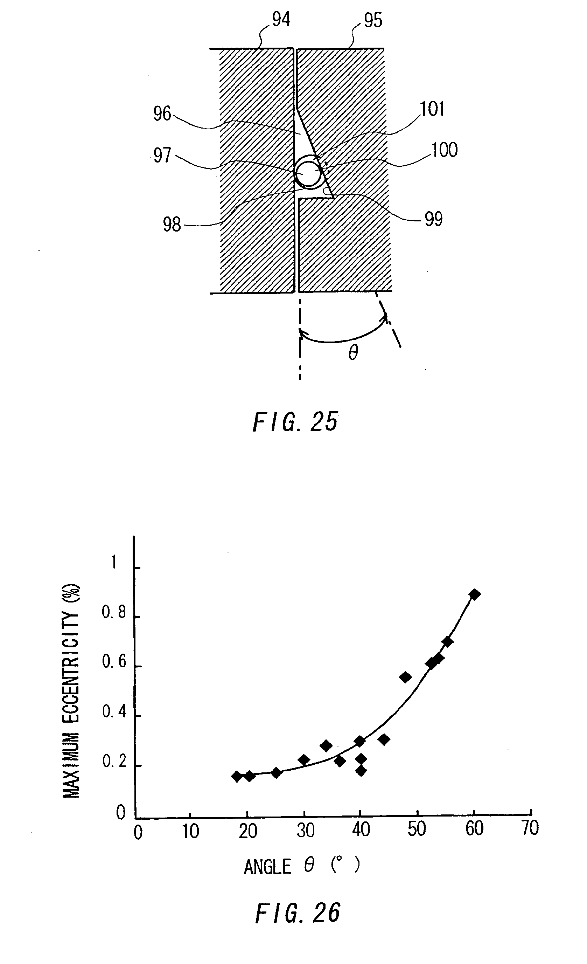

As a sectional view in part of the hanging tool is illustrated in Fig. 25, two holes 101 are pierced through a side wall of the tubular portion 94 while an inner wall of the tubular portion 94 is removed in part. A pin 97 having a column shape and a flat surface 100 thereon is inserted into the holes 101 such that the pin 97 penetrates the tubular portion 94. The pin 97 is put into a gap between the inner wall of the tubular portion 94 and the pyramid recess portion 96. The flat surface 100, which aligns angles with a slope surface 99 forming the pyramid recess 99, makes an area contact with the slope surface 99, as well as an arc circumference of the pin 97 makes a linear contact with the inner surface 98 of the tubular portion 94. The side surface of the glass rod 95 opposing the pyramid recess 96 makes a linear contact with the inner wall of the tubular portion 94.

A porous glass base material 102, as an example of a bar material, coaxially join with the lower end of the glass rod 95. Accordingly, the base material 102 is hung from the device 92 with the hanging tool 91.

The hanging tool 91 described above is used during sintering a porous glass material as follows.

At first, glass particles are deposited via OVD method on a core rod formed via VAD, so that a porous glass base material 102 having the diameter of about 260 mm, the length of about 1200 mm and the weight of about 50 kg is manufactured.

The pyramid recess 96 in which the lower portion there of is deeper is formed by grinding the side surface of the glass material by a grinder. The base material 102 is coaxially welded to the lower end of the glass rod 95.

The glass rod 95 is inserted into the tubular portion 94 of the hanging tool 91 up to height where the pyramid recess 96 is got a view from the holes 101 of the tubular portion 94. The pin 97 is inserted into one of the holes 101 while the flat surface 100 of the pin 97 is almost parallel to the slope surface 99 of the pyramid recess portion 96. The pin 97 is further pushed through the gap between the inner surface of the tubular portion and the pyramid recess 96, and finally penetrates the other hole 101.

In next, the shaft 93 of the hanging tool 91 is connected to the motor 92 to hang the glass rod 95. Due to this, the flat surface 100 of the pint 97 makes a contact in a certain area with the slope surface 99 of the pyramid recess 96.

The own weight of the glass rod 95 acts as a pressing force to the flat surface 100 of the pint 97. The pin 97 receives a downward couple force at the flat surface 100. Due to this, a couple force works for the pin 97 to push the tubular potion 94 upward. A reaction of a component of the couple force makes the side surface of the glass rod 95 opposing the pyramid recess 96 press to and contact in a line manner with the inner wall of the hanging tool 91. The resultant friction thereby fastens the glass rod 95 to the hanging tool 91.

Rotary axes of the motor 92 and the glass material 102 are coincide with each other, then the direction of the rotary axes is directed to the vertical direction. The glass material 102 is inserted into a reactor which has a heating furnace arranged around the circumferential the reactor. The base material 102 is moved down while it is rotated by the drive of the motor 92. Since the glass rod 95 is fastened to the hanging tool 91 and the rotary axis of the base material 102 is directed to the vertical direction, the base material 102 revolves without swings. The base material 102 is sintered in sequence from the bottom as passing by the heating furnace.

According to the embodiment described above, fifteen (15) porous glass base materials having various angles $\theta$ between the slope surface 99 of the pyramid recess 96 and the side surface of the glass rod 95 were prepared and sintered. The displacement between the center point of the core and the center of the cladding surrounding the core was measured in the length direction for each of the base materials 102 thus formed. The ratio of the maximum displacement to the mean major diameter, i.e. the maximum eccentricity was figured out. The relationship between the angle $\theta$ and the maximum eccentricity is indicated in Fig. 26.

When the angle $\theta$ is equal to or less than 40 degree, the maximum eccentricity can be reduced down to about 0.3 %. The connecting loss is enough small to neglect for an optical fiber obtained from the base material having the maximum eccentricity of such a range. If the angle $\theta$ is greater than 50 degree, the maximum eccentricity became rapidly large, and therefore the connecting loss of an optical fiber thus obtained.

In the present embodiment described above, the hanging tool hangs a porous glass base material during sintering. However, the hanging tool may hang a porous glass base material which is growing up via VAD method.

Moreover, in the sintering process to a porous glass base material, preferably, an end portion of the base material is moved to a position near the heating zone, and then it is maintained at the position for a prescribed period from the time when the heating zone of the reactor reaches a sintering temperature. Consequently, the sintering makes progress in advance at the end portion of the base material, the end where the sintering process begins, and then the sintering process starts to the glass material, so that the heating irregularity may vanish at the end portion where the sintering process starts.

It has been found that, in the sintering process to a base material, an end portion of the base material is moved to a position near the heating zone, and then it is maintained at the position for a prescribed period from the time when the heating zone of the reactor reaches a sintering temperature, preferable numerical values of the prescribed period, i.e. the elapsed time T depend on the minor diameter, the length and the volume of the reactor, and the major diameter of the base material and the length of the large diameter portion of the base material. More specifically, the elapsed time T is determined to satisfy the following formula: $T \geq \pi(R^2L-r^2l)/4Q$, so that problems which are likely to arise during sintering are solved.

Furthermore, after the heating zone of the reactor reaches a sintering temperature, it is maintained at the sintering temperature for the prescribed period until the atmosphere gas is thoroughly replaced with the treatment gas, for instance Ar, and the treatment gas adequately reaches up to the core of the base material, and then the base material is moved to the heat zone for sintering.

According to the sintering process described above, the beginning portion where conventionally the sintering process is insufficient has the less heating irregularity because the base material starts moving after the sufficient period is elapsed from the time when the sintering temperature comes, so that the base material for optical fibers which have stable characteristics can be manufactured.

REFERENCE EXAMPLE 11

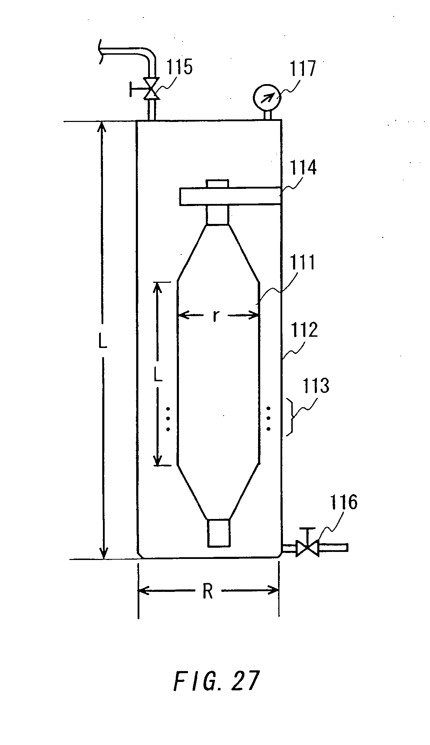

A sintering process to a large size porous glass base material was carried out, using a sintering apparatus as shown in Fig. 27. The sintering apparatus as shown in Fig. 27 included a hanging tool 114, an intake bulb 115, an exhaust bulb 116 and a pressure gage 117.

At first, the base material 111 was set into a reactor 112, and then the reactor 112 turned up the heat. After a heat zone 113 of the reactor 112 reached up to the sintering temperature, the process was waiting for thirty (30) minutes as the elapsed time T. After that, the base material 111 was moved into the heat zone 113, and started sintering. Consequently, the dehydration and vitrifying process were carried out.

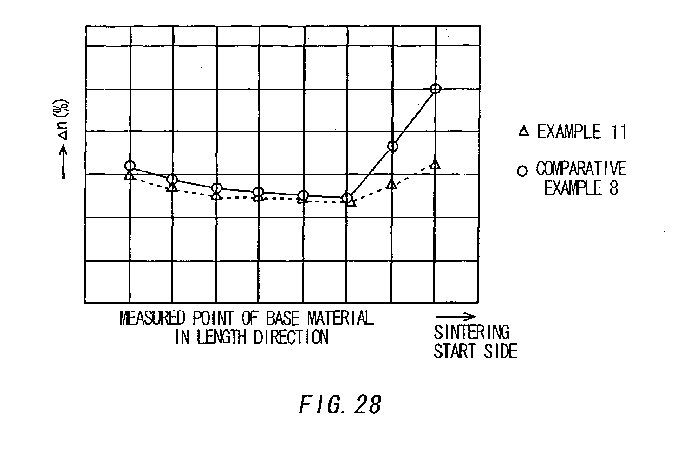

With respect to the base material thus obtained, a refractive index difference $\Delta n(\%)$ from the reference index was measured along the length direction. The result is indicated in Fig. 28. In Fig. 28, triangle symbols ($\Delta$) represent the measured values according to Example 11.

Furthermore, after the heat zone 113 of the reactor 112 reached up to the sintering temperature, it elapsed in time of thirty (30) minutes and the atmosphere gas was sufficiently replaced with Ar gas.

Then the base material 111 started moving to the heat zone 113, so that the sintering process was achieved. Under this condition, the similar results were obtained.

COMPARATIVE EXAMPLE 8

A porous glass base material was sintered, using the same apparatus as Example 11 but the different conditions for comparison.

After the base material is installed in the sintering apparatus, the reactor turned the heat up. Immediately after the reactor heated up to the sintering temperature, the base material is moved to the heat zone so that a base material for an optical fiber was sintered. With respect to the base material thus sintered, a refractive index difference $\Delta n(\%)$ from the reference index was measured, similar to Example 11. The result is indicated in Fig. 28. In Fig. 28, circle symbols (o) represent the measured values according to Comparative Example 8.

As apparent from Fig. 28, the base material of Example 11 had no insufficient heating at the beginning but the uniform refractive index in the length direction, and was superior than conventional ones.

As described above, the base material hanging tool according to the present embodiment can certainly and easily hang a glass rod to which a base material is welded, as well as rotate the base material without swings. Therefore, the base material can be subjected to the heat treatment like the sintering without eccentricity. High quality optical fibers having no connecting loss can be obtained from the base material thus formed.

Moreover, according to the present embodiment, after the reactor reaches up to the sintering temperature, the process is waiting for the prescribed period, and then the base material is subjected to the process at a uniform speed, so that the treatment gas can reach the core of the base material, and the base material which has little irregular heat and little fluctuation of the characteristics can be manufactured with high efficiency.

A method for modifying a non-circularity shape of a glass base material after vitrifying, according to an embodiment of the present invention will be described.

The non-circularity is defined by the deviation of the outer peripheral shape from a perfect circle, being indicated by a parameter of the non-circularity ratio Nc (%) as follows:

$$Nc = ((Dmax-Dmin)/D)*100 \ (\%),$$

where the symbols Dmax (mm) represents the maximum diameter of the base material; Dmin (mm) represents the minimum diameter thereof; D (mm) represents the mean diameter.

In the present embodiment, modification to the non-circularity on the base material is achieved by an etchant. More specifically, the maximum diameter Dmax 122 in a cross section being perpendicular to the axis of the base material 121 directs perpendicular to the etchant surface, as shown in Figs. 29A to 29C. It is preferable to use HF as etchant, and may be suitably added other chloride or acid therewith.

As immersing the base material in the etchant, the base material which is horizontally kept may start being immersed from the lower side thereof in the etchant, otherwise, the etching surface may be made go down such that the etchant is drained from a condition that the base material has been sunk in the etchant.

For example as shown in Fig. 29A, after the base material which is horizontally positioned is installed on a mounter 126 in an etching tank 125, the etchant 124 is supplied to the etching tank 125, and the etching surface 133 is shifted up to the etching surface 123, so that the base material 121 is immersed in the etchant 124, starting with the lower surface of the base material 121. For another example as shown in Fig. 29B, the base material 121 is moved down to the etching surface 123, so that the base material 121 is immersed from the lower surface thereof in the etchant 124. For still further example as shown in Fig 29C, the etching surface 133 is made go down to the etching surface 123 such that the etchant is drained from the etching tank 125 from a condition that the base material has been sunk in the etchant.

In the modification of the embodiment, the maximum immersing depth dmax of the base material into the etchant is up to the maximum radius. One of the maximum radius sides of the base material is modified with the etchant first, and then the base material is turned by 180 degree around the axis so that the other of the maximum radius sides is modified. During these process, the immersing speed V, V' is changed from start to end. Accordingly, the non-circular shape of the base material can be modified to the circular shape.

The immersing speed V, V' is changed from start to end, based on result from simulation and actual experiment, so as to obtain more better circular shape. More specifically, in the immersing process as shown in Figs. 29A and 29B, the immersing speed V of the initial stage is small, and the immersing speed V' of the final stage is large. On the other hand, in the immersing process as shown in Fig. 29C, the immersing speed V of the initial stage is large, and the immersing speed V' of the final stage is small. These immersing speeds V and V' are formulated, being function of the depth d of immersing the base material into the etchant, as follows:

$$V=\{a(1/D)^3L^3+b(1/D)^2L^2+c(1/D)L+d(1/D)\}Ve/Nc,$$

Where D (mm) represents the mean major diameter; L (mm), the immersed depth in etchant; Ve (mm/min), the etching speed; Nc (%), non-circularity; a, b, c and d, numerical constants.

Accordingly, the immersing speeds V and V' are controlled based on the immersing depth d, so that the non-circular shape can be modified to the circular shape in a better manner.

EXAMPLE

A base material having the non-circularity Nc of 1.0 %, the maximum diameter of 50.250 mm, the minimum diameter of 49.750 mm, the mean diameter D of 50.000 mm and the length 250 mm was installed in an HF tank. Then, the HF etchant was supplied from the bottom of the tank. The immersing speed V for the base material after the base material began to immerse in the HF etchant from supplying the HF etchant was changed in accordance with the regulation of the following formula:

$$V=\{6330(1/50.000)^3 L^3-$$
$$1720(1/50.000)^2 L^2+235(1/50.000)L$$
$$-50(1/50.000)\}*0.001667/1.0,$$

where the etching speed Ve was 0.001667 mm/min.

Under this condition, the relationship between the surface up speed, i.e. immersing speed, V and the base material immersed length, i.e. immersing depth, d is indicated in Fig. 30.

One of the maximum radius sides of the base material was subjected to the modification for 149 minutes. Then the base material was turned by 180 degree, the other maximum radius side was further subjected to the modification for 149 minutes.

Consequently, the base material was modified as follows: the non-circularity Nc of 0.001 %; the maximum diameter of 49.752 mm; the minimum diameter of 49.746 mm; the mean diameter D of 49.750 mm.

COMPARATIVE EXAMPLE 9

A base material having the non-circularity Nc of 0.86 %, the maximum diameter of 52.200 mm, the minimum diameter of 51.750 mm, the mean diameter D 51.975 mm and the length of 20 mm was prepared. The base material was subjected to etching under the condition that the base material sank for 180 minutes in an etching tank filling, in advance, with HF etchant.

The resultant shape of the base material was obtained as follows: the non-circularity Nc of 0.87 % ; the maximum diameter of 51.600 mm; the minimum diameter of 51.150 mm; the mean diameter D of 51.375 mm.

According to the present embodiment of the invention, the modification for the non-circular shape with immersing the etchant can became easier although it is difficult to be achieved by conventional methods. Therefore, base materials which are conventionally abandoned because of the large non-circularity can be reproduced, so that the productivity can be raised.

Furthermore, if a base material obtained by dehydrating and sintering to vitrify a soot deposited material made by OVD method still has unevenness on the surface, a core diameter varies when the base material is elongated for making a preform of an optical fiber, so that the optical characteristics are badly influenced for an optical fiber obtained by drawing the preform.

In order to avoid the difficulties, it is necessary to grind the surface of the base material having the unevenness so as to form a smooth even column shape (hereinafter, it is called "a columned grinding", when applicable). In this process, the circularity of the sintered base material and the eccentricity of the core portion are important. Especially, the circularity of the optical fiber and the eccentricity of the core portion give a great influence upon the optical characteristic, for instance the connecting loss for the connecting operation at laying the optical fiber cable.

A method for a columned grinding for a base material can be performed such that the position of the core portion of the base material is measured with an optical manner, the rotational center at the grinding is determined, conical portions having common rotational axes coincide with the perfect circle on the core portion are formed at the both ends of the base material, a reference direction surface, i.e. an orientation flat on the conical portion is formed by grinding the conical portion so as to confirm the circumferential orientation of the core portion, and then the base material is installed in the rotary center of a grinder. Under this condition, the columned grinding is carried on, so that the inferior eccentricity or the like of the core portion can be avoided. Consequently, base materials having stable optical characteristics can be manufactured with high through put, and optical fibers of high optical characteristics can be obtained by drawing preforms being elongated the base materials thus manufactured.

REFERENCE EXAMPLE 12

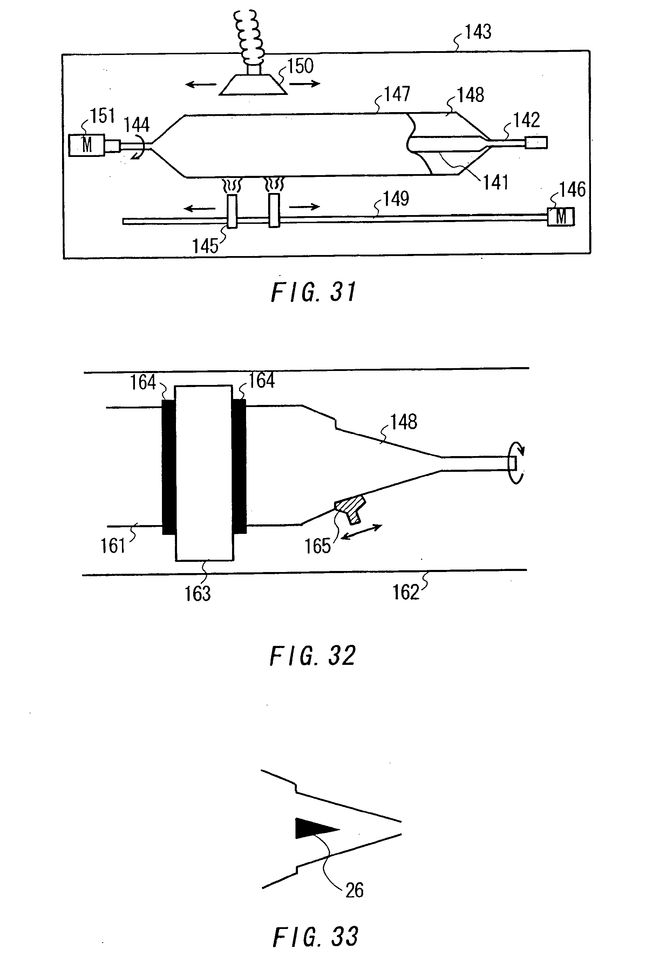

Fig. 31 illustrates an example of a base material manufacturing apparatus. A quartz glass rod for a core of the major diameter of 25 mm, the length 1200 mm, and the refractive index for a single mode optical fiber was used for an initial material 141. The initial material 141, which was welded to a dummy rod 142 made from quartz glass, was attached to a core rotation motor 151, and then it was rotated at 40 rpm with the core rotation motor 151.

Plural oxyhydrogen flame burners 145 having relatively large diameter and size to conventional ones were prepared, and, to the burners 145, oxygen gas of 80 $cm^3$/min, hydrogen gas of 160 $cm^3$/min, and a carrier gas of oxygen gas of 10 $cm^3$/min accompanying a material gas of $SiCl_4$ of 40 g/min were supplied through a material supplying device. These burners 145 were moved by a transverse motor 146 in the reciprocation manner within the width of 1600 mm at the speed of 150 mm/min, so that glass particles formed due to flame hydrolysis of $SiCl_4$ were deposited on the initial material 141. The material gas increased more as the deposition were growing up, and after 24 hours, the soot deposited material having the major diameter of 230 mm were obtained. Immediately before finishing the deposition process, to the burners 145, oxygen gas of 240 cm$^3$/min, hydrogen gas of 480 cm$^3$/min, and the carrier gas of oxygen gas of 240 cm$^3$/min accompanying the material gas of SiCl$_4$ of 125 g/min were supplied through the material supplying device.

It was found that the soot deposited material 147, which was grown at the high deposit speed in average of 30 g/min, had uneven surface condition in a spiral manner. Furthermore, the soot deposited material 147 was installed in a heat furnace, and subjected to dehydrating and sintering to vitrify so that a transparent base material was obtained. However, the uneven surface condition in a spiral manner was still found even after vitrifying. The maximum depth of the uneven surface was 1.35 mm. If an optical fiber is made from a preform from the base material, the large connecting loss, which is one of the optical characteristics of the optical fiber, at connecting via fusion of the optical fiber due to the eccentricity occurs.

Sequentially, as a first grinding process, conical portions having common rotational axes coincide with the perfect circle on the core portion were formed at both ends of the base material. Moreover, a reference direction surface, i.e. an orientation flat on the conical portion thus formed was made by grinding the conical portion so as to confirm the inclination angle to the circumferential direction of the core portion, that is, the circumferential orientation of the core portion. After the smooth conical portion were thus formed at the both ends of the base material, and the base material was installed in a grinder for further grinding.

More specifically, as shown in Fig. 32, the base material 161 was attached to a chuck 163 of a taper grinder 162, and fastened with a chuck supporter 164. After that, the position of the core portion was measured by an optical measure not shown, for instance an optical measure using a polarized glass, while the base material 161 was being rotated. As the chuck 163 was moved, the center position of the core was adjusted until it was coincide with the rotational axis of the chuck supporter 164. The setting operation of the base material was thus achieved. For grinding a taper portion 149 at one end portion of the base material, a diamond wheel of the roughness number #600 was applied, and the taper portion 149 was ground such that a conical shape having the angle of 10 degree with respect to the central axis of the core was formed. With respect to the other end portion of the base material 161, the same conical shape for another taper portion 149 was formed. One of the taper portion 149 was further ground such a manner that an orientation flat 166 for the reference position of the circumferential direction, that is, for detecting the inclination angle to the circumferential direction, was formed as shown in Fig. 33.

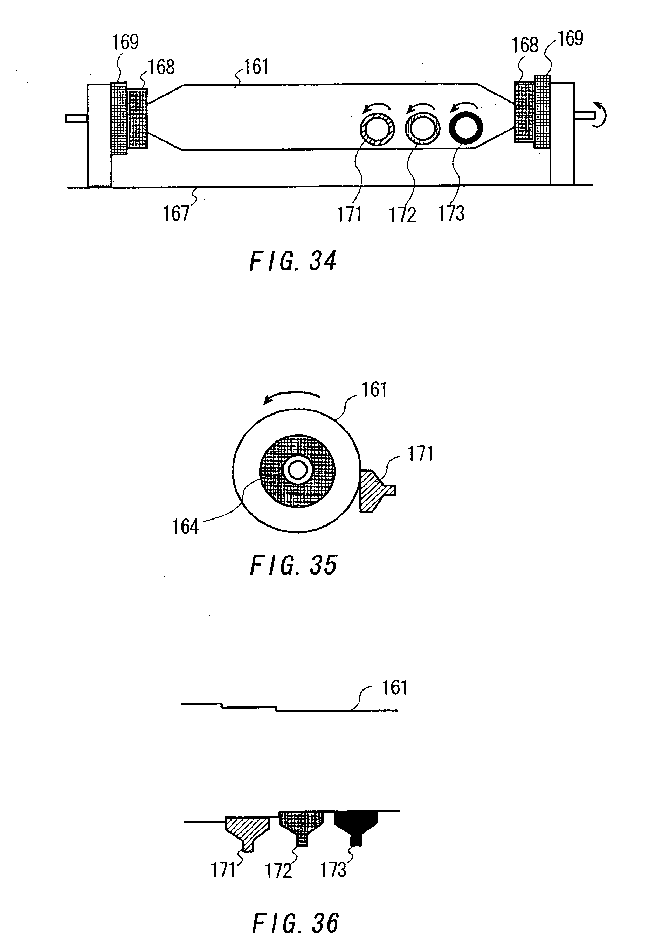

Sequentially, as in a second grinding process, the circumference of the large diameter portion of the base material 161 was ground so as to take the uneven surface away. At first, the base material 161 on which the conical portions were formed was attached to chucks 168 of a columned grinder 167 as shown in Fig. 34, and fastened with respective chuck supporters 169. One of the chucks 168 was prepared for positioning the base material 161 at the orientation flat 166. In next, the base material 161 was rotated, and the eccentricity of the core portion of the base material 161 was measured in the length direction by an optical measure not shown. The rotational angle with respect to the orientation flat 166, the eccentricity, and the position in the length direction were memorized in a control device.

It is noted that, in Figs. 34 to 36, a support mechanism for diamond wheels of the grinder is left out.

Based on these data, the diamond wheels 171, 172 and 173 were installed as follows, and rotated. Under this condition, one grinding process was carried out such that the base material was fed at the feeding speed of 50 mm/min while water-cooling at the grinding portion. According to this grinding process, the surface of the base material 161 became even, and the core portion thereof was able to measure clearly.

In this process, roughness of diamond wheels 171, 172 and 173 was respectively #60, #140 and #600. The wheels were positioned such that the grinding depth of the wheel 171 was 0.75 mm, the depth of the wheel 172 was deeper by 0.3 mm than that of the wheel 171, and the depth of the wheel 173 was deeper by 0.05 mm than that of the wheel 172, as shown in Figs. 35 and 36.

Sequentially, the diameter ratio of the core to the cladding and the eccentricity of the core were measured with an optical measure device while rotating the base material 161. Based on the results thus measured, the fine adjustment for the rotational center of the core was performed with the chuck. Furthermore, in order to adjust the diameter ratio of the core to the cladding, a finishing grinding process was carried out, using the wheel 173 of #600 only, under conditions of the grinding depth of 0.05 mm and the feeding speed of 50 mm/min for the base material. Thus, the grinding process for the large diameter portion of the base material was completed.

It took about 120 minutes for the grinding process for the large diameter portion. The resultant surface of the base material was quite flat, and comparable to base materials which were grown up at small deposit speed, so that the manufactured time period, even including the columned grinding process for taking uneven surface away, was shortened up to about 1/2 of the conventional method.

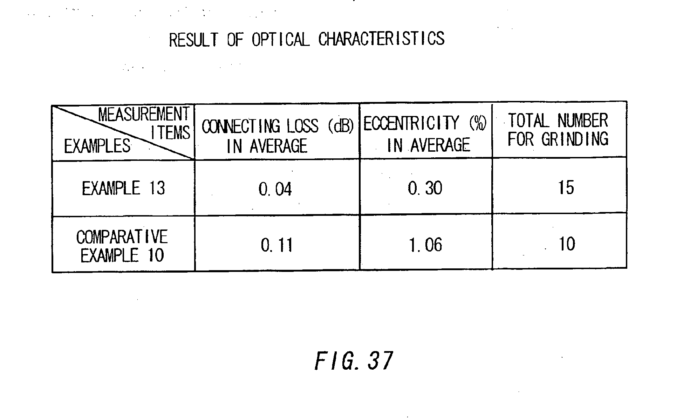

Fifteen (15) base materials were ground under the conditions described above. The base materials thus ground were elongated to form preforms having the major diameter of 45 mm in an electric furnace, and then the preforms thus formed were drawn by a drawing device, and finally, optical fibers having the major diameter of 125 μm were obtained. As the optical characteristics of the optical fibers thus formed were measured, both of the eccentricity of the core and the connecting loss were indicated extremely small, in good conditions, as shown in Fig. 37.

COMPARATIVE EXAMPLE 10

A soot deposited material prepared similar to Example 12 was installed into a furnace for dehydrating and sintering to vitrify, and a transparent base material was thus obtained. On the base material thus obtained, the uneven surface was still found in a spiral manner even after vitrifying. The maximum depth of the uneven surface was 1.20 mm.
The base material was mounted in a conventional manner on a columned grinder. The base material was ground in three times, using a diamond wheel of #60, under conditions of the grinding depth of 0.05 mm and the feeding speed of 70 mm/min for the base material while water-cooling at the grinding portion. Moreover, the base material was ground in one time, using a diamond wheel of #600, under conditions of the grinding depth of 0.1 mm and the feeding speed of 50 mm/min for the base material, and still further a finishing grinding process was carried out, under conditions of the grinding depth of 0.05 mm and the feeding speed of 50 mm/min for the base material. Thus, the grinding process for the large diameter portion of the base material was completed.
Ten (10) base materials were ground under the conditions described above. The base materials thus ground were elongated to form preforms having the major diameter of 45 mm in an electric furnace, and then the preforms thus formed were drawn by a drawing device, and finally, optical fibers having the major diameter of 125 μm were obtained. As the optical characteristics of the optical fibers thus formed were measured, it was indicated that the eccentricity of the core had large dispersion, as shown in Fig. 37. It was found that a cause thereof was the loose fitting with the chuck at attaching the taper portions to the columned grinder due to uniform shapes of the taper portions of end portions of the base material and therefore the attached position was displaced due to shaking during grinding.
According to the present embodiment described above, although a base material is made of a soot deposited material formed under condition for likely generating uneven surface thereon, both end portions of the base material are ground to form taper portions and a orientation flat on one of the taper portion. Therefore, the displacement during grinding the outer circumference of the large diameter portion of the base material can be prevented. Moreover, the reference point in the circumferential direction is decided with the orientation flat, and the grinding depth is adjusted in the circumferential direction, so that delicate bends of the core portion generated at sintering can be modified, the eccentricity thereof can become small in good condition, and the optical characteristics are comparable to that of base materials formed with a slow depositing speed.
An optical fiber obtained such that the base material thus ground is elongated to form preforms having the designated diameter and then the preform thus formed is drawn, can have the optical characteristics thereof in good conditions, especially, both of the eccentricity of the core and the connecting loss can be extremely small.
Apparent as described above, according to methods for manufacturing base materials, modifying them according to the present invention, apparatus therefor and the base materials manufactured by the same, the base materials for optical fibers having the stable characteristics can be manufactured with low cost, and therefore it is quite variable for industrial applications.

**Claims**

1. A method for reducing a non-circularity of a glass base material (121) for an optical fiber after vitrifying, **characterized by** comprising the step of:

   etching the glass base material (121) wherein a direction of a maximum diameter (122) of the glass base material (121) with respect to a section perpendicular to the axis of the glass base material (121) is perpendicular to an etchant surface (123, 133), wherein the etching step comprises:

   immersing the glass base material (121) in the etchant (124) with an immersing speed V, wherein the maximum immersing depth (dmax) of the glass base material into the etchant is up to the maximum radius and wherein the immersing speed V is changed from start to end.

2. The modifying method according to claim 1, **characterized in that** the immersing speed (V) is controlled based on an immersing depth (d).

**Patentansprüche**

1. Verfahren zum Verringern einer Unrundheit eines Glasbasismaterials (121) für eine optische Faser nach dem Verglasen, **dadurch gekennzeichnet, dass** es den Schritt aufweist:

Ätzen des Glasbasismaterials (121), wobei eine Richtung eines maximalen Durchmessers (122) des Glasbasismaterials (121) mit Bezug auf einen Abschnitt senkrecht zu der Achse des Glasbasismaterials (121) senkrecht zu einer Ätzmittel-Oberfläche (123, 133) ist, worin der Ätzschritt aufweist:

Eintauchen des Glasbasismaterials (121) in das Ätzmittel (124) mit einer Eintauchgeschwindigkeit V, wobei die maximale Eintauchtiefe (dmax) des Glasbasismaterials in das Ätzmittel bis zu dem maximalen Radius ist und wobei die Eintauchgeschwindigkeit V vom Anfang bis zum Ende geändert wird.

2. Modifikationsverfahren nach Anspruch 1, **dadurch gekennzeichnet, dass** die Eintauchgeschwindigkeit (V) auf der Grundlage einer Eintauchtiefe (d) gesteuert wird.

**Revendications**

1. Procédé pour réduire une non circularité d'un matériau à base de verre (121) pour une fibre optique après vitrification, **caractérisé en ce qu'**il comprend les étapes de :

gravure du matériau à base de verre (121) selon laquelle une direction d'un diamètre maximum (122) du matériau à base de verre (121) par rapport à une section perpendiculaire à l'axe du matériau à base de verre (121) est perpendiculaire à une surface de milieu gravant (123, 133), dans lequel l'étape de gravure comprend :

l'immersion du matériau à base de verre (121) dans le milieu gravant (124) avec une vitesse d'immersion V, dans lequel la profondeur d'immersion maximum (dmax) du matériau à base de verre dans le milieu gravant est jusqu'au rayon maximum et dans lequel la vitesse d'immersion V est changée du début jusqu'à la fin.

2. Procédé de modification selon la revendication 1, **caractérisé en ce que** la vitesse d'immersion (V) est contrôlée sur la base d'une profondeur d'immersion (d).

*FIG. 1*

FIG. 2A          FIG. 2B          FIG. 2C

FIG. 3

FIG. 4

FIG. 5

FIG. 6

FIG. 7

FIG. 8

FIG. 9A

FIG. 9B

λc

MFD

MFD

—— EXAMPLE 1-3

---- COMPARATIVE
EXAMPLE 1

λc

OPTICAL FIBER LENGTH

*FIG. 10*

a

b

—— ACTUAL SHAPE

—— PERFECT CIRCLE

a, b  DEVIATION DISTANCE
(a>0, b<0)

*FIG. 11*

VARIATION OF ROTATION NUMBER FOR TIME
(EXAMPLE 5)

FIG. 12

VARIATION OF ROTATION NUMBER FOR TIME
(COMPARATIVE EXAMPLE 5)

FIG. 13

EP 1 894 898 B1

*FIG. 14*

29

EXAMPLE 7

FIG. 15

COMPARATIVE EXAMPLE 3

FIG. 16

*FIG. 17*

*FIG. 18A*        *FIG. 18B*

FIG. 19A

FIG. 19B

FIG. 19C

FIG. 20A

FIG. 20B

FIG. 20C

FIG. 20D

EP 1 894 898 B1

RELATED ART
FIG. 21A

RELATED ART
FIG. 21B

RELATED ART
FIG. 21C

RELATED ART
FIG. 21D

51

61

72

62
63
66
64
67
65
60
68

73

77
78
79
LASER
DISPLACEMENT
METER

71

70

77
78
79
LASER
DISPLACEMENT
METER

74

75

76

Cl₂, He

FIG. 22

FIG. 23

*FIG. 24*

FIG. 25

FIG. 26

*FIG. 27*

FIG. 28

*FIG. 29A*

*FIG. 29B*

*FIG. 29C*

FIG. 30

*F I G. 31*

*F I G. 32*

*F I G. 33*

*FIG. 34*

*FIG. 35*

*FIG. 36*

RESULT OF OPTICAL CHARACTERISTICS

| MEASUREMENT ITEMS<br>EXAMPLES | CONNECTING LOSS (dB)<br>IN AVERAGE | ECCENTRICITY (%)<br>IN AVERAGE | TOTAL NUMBER<br>FOR GRINDING |
|---|---|---|---|
| EXAMPLE 13 | 0.04 | 0.30 | 15 |
| COMPARATIVE<br>EXAMPLE 10 | 0.11 | 1.06 | 10 |

*FIG. 37*

**EP 1 894 898 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 63139024 A